# EUROPEAN PATENT APPLICATION

(11) **EP 4 667 324 A1**
(43) Date of publication of application: **24.12.2025**
(21) Application number: 24865284.4
(22) Date of filing: 30.08.2024
(51) Int. Cl.: B62D 7/18, B62K 5/007, B62K 5/08

(54) **STEERING MECHANISM AND ELECTRIC MOBILITY VEHICLE**

(30) Priority: 12.09.2023 JP 2023147884
(71) Applicant: Whill, Inc., Tokyo 140-0002 (JP)
(72) Inventor: HSU, Shuyu, Tokyo 140-0002 (JP); NAITO, Junpei, Tokyo 140-0002 (JP)
(74) Representative: Isarpatent
(86) International application number: PCT/JP2024/031217
(87) International publication number: WO 2025/057782

(57) **Abstract**

A steering mechanism that steers a pair of front wheels (10) of an electric mobility vehicle, wherein the steering mechanism is capable of steering an inner wheel and an outer wheel such that a steering angle difference between an inner wheel steering angle and an outer wheel steering angle when the inner wheel steering angle is a second angle which is within a range of 90° or greater is at least five times the steering angle difference when the inner wheel steering angle is a first angle which is within a range of 40° to 45°, wherein the inner wheel steering angle is a steering angle of the inner wheel and the outer wheel steering angle is a steering angle of the outer wheel.

## Description

### {Technical Field}

The present invention relates to an electric mobility vehicle and a steering mechanism thereof.

### {Background Art}

As such a steering mechanism for an electric mobility vehicle, one including a pitman arm, left and right knuckles, and rods that respectively join the pitman arm and the left and right knuckles is known. See PTL 1, for example.

### {Citation List}

### {Patent Literature}

{PTL 1}
Specification of US Unexamined Patent Application, Publication No. 2022/0396309

### {Summary of Invention}

### {Technical Problem}

Although the electric mobility vehicle has a steering mechanism for a pivot turn or spin turn, it is actually difficult with the configuration of the electric mobility vehicle to cross a center axis of a pair of front wheels and a center axis of a pair of rear wheels at an intermediate position or a center position of the pair of rear wheels. It is therefore difficult to achieve a smooth spin turn.

In view of the aforementioned circumstances, a steering mechanism that can achieve a smooth spin turn is demanded.

### {Solution to Problem}

An aspect of the present invention is a steering mechanism that steers a pair of front wheels of an electric mobility vehicle, wherein the steering mechanism is capable of steering an inner wheel and an outer wheel such that a steering angle difference between an inner wheel steering angle and an outer wheel steering angle when the inner wheel steering angle is a second angle which is within a range of 90° or greater is at least five times the steering angle difference when the inner wheel steering angle is a first angle which is within a range of 40° to 45°, wherein the inner wheel steering angle is a steering angle of the inner wheel and the outer wheel steering angle is a steering angle of the outer wheel.

In addition, another aspect of the present invention is a steering mechanism that steers a right front wheel and a left front wheel of an electric mobility vehicle, the steering mechanism comprising: a center shaft that is rotatable about a first axis extending at least in an up-down direction and that is rotated by operation of a handle; a pitman arm fixed to the center shaft; a right knuckle that is rotatable about a right second axis extending at least in the up-down direction and that supports the right front wheel; a right knuckle arm provided in the right knuckle; a left knuckle that is rotatable about a left second axis extending at least in the up-down direction and that supports the left front wheel; a left knuckle arm provided in the left knuckle; a right rod having one end coupled to the right knuckle arm and an opposite end coupled to the pitman arm; and a left rod having one end coupled to the left knuckle arm and an opposite end coupled to the pitman arm, wherein each of the rods is arranged in an inclined manner such that a difference in height position between the opposite end and the one end is more than or equal to 15 mm when the right front wheel and the left front wheel are located at a straight-traveling steering angle for straight traveling of the electric mobility vehicle, and when the inner wheel steering angle is 90° or greater, the difference in height position becomes smaller than the difference in height position at the straight-traveling steering angle by at least 4 mm.

### {Brief Description of Drawings}

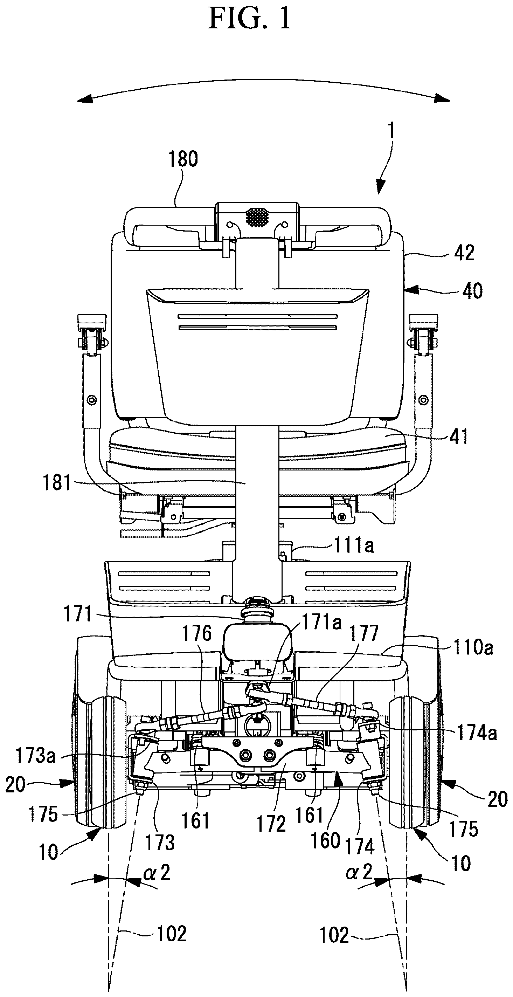

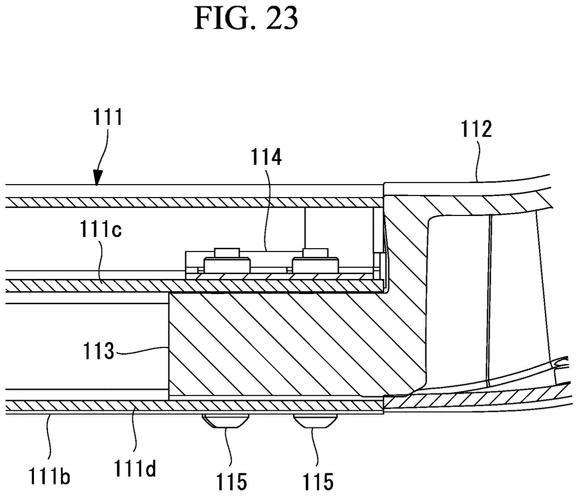

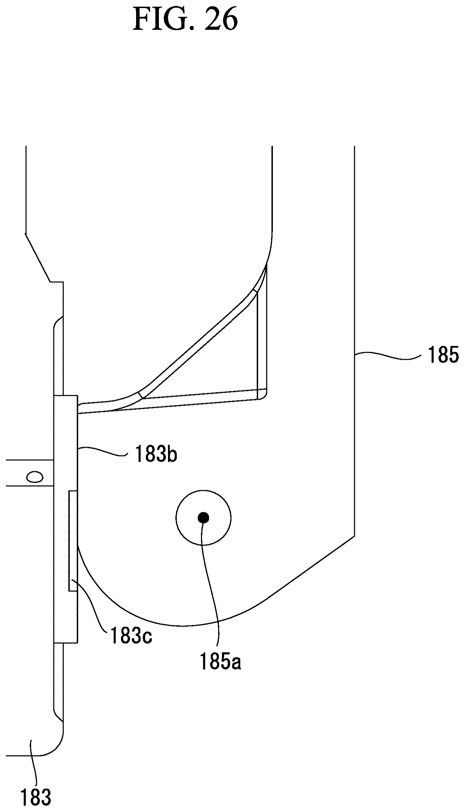

{Fig. 1}
   Fig. 1 is a front view of an electric mobility vehicle according to an embodiment.
{Fig. 2}
   Fig. 2 is a rear perspective view of the electric mobility vehicle of the present embodiment.
{Fig. 3}
   Fig. 3 is a side view of the electric mobility vehicle of the present embodiment.
{Fig. 4}
   Fig. 4 is a bottom view of the electric mobility vehicle of the present embodiment.
{Fig. 5}
   Fig. 5 is a plan view of a rear-wheel-side vehicle body of the electric mobility vehicle of the present embodiment.
{Fig. 6}
   Fig. 6 is a partial cross-sectional view of the rear-wheel-side vehicle body of the electric mobility vehicle of the present embodiment.
{Fig. 7}
   Fig. 7 is a cross-sectional view taken along the line VII-VII in Fig. 5.
{Fig. 8}
   Fig. 8 is a bottom view of the rear-wheel-side vehicle body of the electric mobility vehicle of the present embodiment.
{Fig. 9}
   Fig. 9 is a perspective view of relevant portions of the rear-wheel-side vehicle body of the electric mobility vehicle of the present embodiment.
{Fig. 10}
   Fig. 10 is a rear view of a swing base of the electric mobility vehicle of the present embodiment and a swing control portion of a first modification.
{Fig. 11}
   Fig. 11 is a perspective view of relevant portions of the rear-wheel-side vehicle body of the electric mobility vehicle of the present embodiment and the swing control portion of the first modification.
{Fig. 12}
   Fig. 12 is a rear view of the swing base of the electric mobility vehicle of the present embodiment and a swing control portion of a second modification.
{Fig. 13}
   Fig. 13 is a rear view of the swing base of the electric mobility vehicle of the present embodiment and a swing control portion of a third modification.
{Fig. 14}
   Fig. 14 is a rear view of the swing base of the electric mobility vehicle of the present embodiment and a swing control portion of a fourth modification.
{Fig. 15}
   Fig. 15 is a rear view of a swing base of a modification of the electric mobility vehicle of the present embodiment and a swing control portion of a fifth modification.
{Fig. 16}
   Fig. 16 is a rear view of a swing base of another modification of the electric mobility vehicle of the present embodiment and a swing control portion of a sixth modification.
{Fig. 17}
   Fig. 17 is a front view of relevant portions of the electric mobility vehicle of the present embodiment.
{Fig. 18}
   Fig. 18 is a plan view for illustrating operation of a steering mechanism of the present embodiment.
{Fig. 19}
   Fig. 19 is a plan view for illustrating operation of the steering mechanism of the present embodiment.
{Fig. 20}
   Fig. 20 is a plan view for illustrating operation of the steering mechanism of the present embodiment.
{Fig. 21}
   Fig. 21 is a plan view for illustrating operation of the steering mechanism of the present embodiment.
{Fig. 22}
   Fig. 22 is an exploded perspective view of relevant portions of a front-wheel-side frame of the present embodiment.
{Fig. 23}
   Fig. 23 is a cross-sectional view of relevant portions of the front-wheel-side frame of the present embodiment.
{Fig. 24}
   Fig. 24 is a cross-sectional view of an angle adjusting mechanism of the present embodiment.
{Fig. 25}
   Fig. 25 is a cross-sectional view of relevant portions of the angle adjusting mechanism of the present embodiment.
{Fig. 26}
   Fig. 26 is a front view of relevant portions of the angle adjusting mechanism of the present embodiment.
{Fig. 27}
   Fig. 27 is a cross-sectional view of relevant portions of the electric mobility vehicle of the present embodiment.
{Fig. 28}
   Fig. 28 is a cross-sectional view of relevant portions of the electric mobility vehicle of the present embodiment.
{Fig. 29}
   Fig. 29 is a side view of the electric mobility vehicle of the present embodiment in a stored state.
{Fig. 30}
   Fig. 30 is a block diagram of a control unit of the electric mobility vehicle of the present embodiment.

### {Description of Embodiments}

An electric mobility vehicle 1 according to an embodiment of the present invention will be described below with reference to the drawings.

This electric mobility vehicle 1 has a mobility main body 30 as illustrated in Fig. 1 to Fig. 4. The mobility main body 30 has a pair of front wheels 10, a pair of rear wheels 20, and a body 31 supported by the front wheels 10 and the rear wheels 20. In addition, this electric mobility vehicle 1 has a seat unit 40 detachably attached to the mobility main body 30. The electric mobility vehicle 1 of the present embodiment is intended for one person to ride thereon sitting on the seat unit 40. Such a vehicle may be referred to as a personal mobility vehicle. In the following description, a vehicle front-to-rear direction will be simply described as a front-to-rear direction in some cases, and a vehicle width direction will be simply described as a width direction in some cases. In addition, the vehicle front-to-rear direction matches a front-to-rear direction of the mobility main body 30 or the body 31, and the vehicle width direction matches a width direction of the mobility main body 30 or the body 31. In addition, in the following description, the electric mobility vehicle 1 placed on a horizontal plane in an unloaded state or in a state in which a predetermined load is applied will be basically described. An example of the state in which a predetermined load is applied is a state in which an object or a person having an acceptable weight for the electric mobility vehicle 1 or an object or a person weighing two-thirds of the acceptable weight is on the seat unit 40.

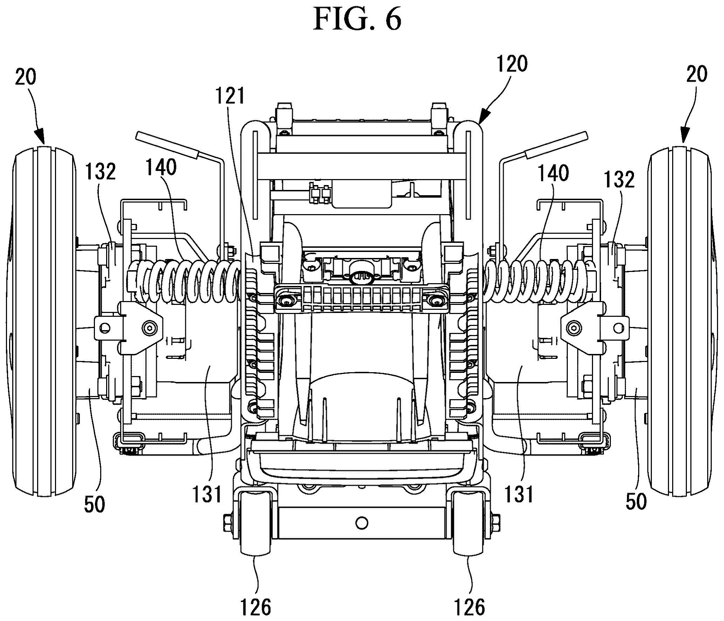

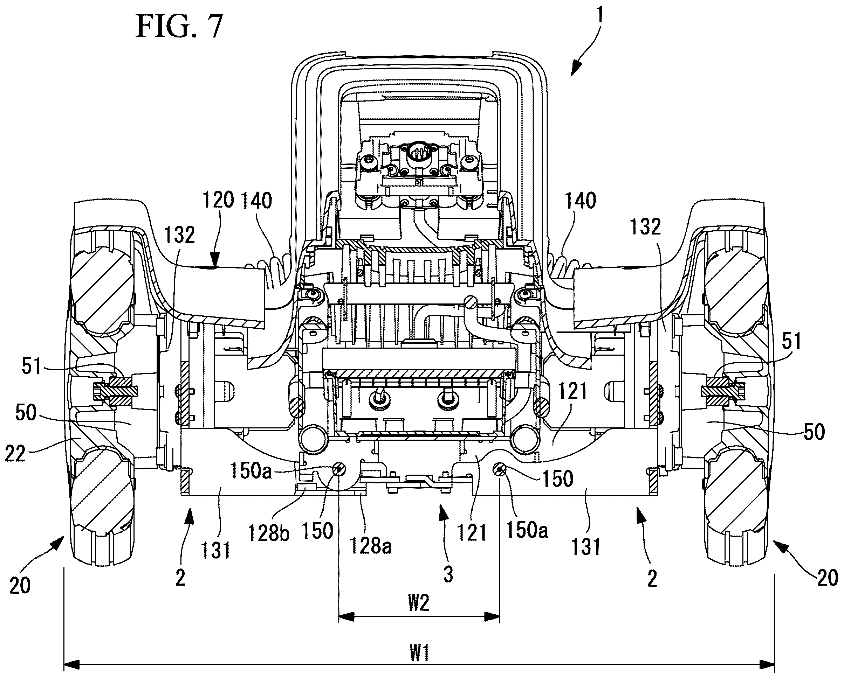

In the present embodiment, as illustrated in Fig. 6 and Fig. 7, output shafts 51 of motors 50 are respectively connected to the pair of rear wheels 20, and the two rear wheels 20 can be driven by the respective motors 50. In the present embodiment, the output shafts 51 of the motors 50 function as axles of the rear wheels 20. On the other hand, a configuration may be adopted in which driving forces of the motors 50 are transmitted to the pair of front wheels 10 via power transmission members such as belts, gears, shafts, and the axles of the rear wheels 20.

The respective front wheels 10 are supported on the body 31. In the present embodiment, the pair of front wheels 10 have axles 11, hubs 12 attached to the axles 11, and outer circumferential members 13 provided on outer circumferential sides of the hubs 12 and having outer circumferential surfaces formed of a material having rubber-like elasticity, such as rubber or silicon. The front wheel 10 is configured to be rotatable by means of a bearing (not illustrated) such as a wheel bearing.

In the present embodiment, each of the rear wheels 20 has an axle such as the output shaft 51 of the motor 50, a hub 22 attached to the axle, and an outer circumferential member 23 provided on an outer circumferential side of the hub 22 and having an outer circumferential surface formed of a material having rubber-like elasticity, such as rubber or silicon.

In the present embodiment, the front wheels 10 and the rear wheels 20 may be pneumatic tires, or may be solid tires which is formed of a material having rubber-like elasticity in the inside.

The mobility main body 30 has a front-wheel-side vehicle body 110 and a rear-wheel-side vehicle body 120 detachably coupled to the front-wheel-side vehicle body 110. The front-wheel-side vehicle body 110 has a front-wheel-side frame (vehicle body frame) 111 which has a front end side formed to extend along the ground surface and to which the axles of the front wheels 10 are attached through a front wheel suspension 160 interposed therebetween. A rear end side of the front-wheel-side frame 111 is an up-down-direction frame 111a extending upward, and the seat unit 40 is attached to its upper end side. The front wheel suspension 160 has bases 172 that support the pair of front wheels 10 at both ends in the vehicle width direction with knuckles 173, 174 interposed therebetween and a pair of springs 161 attached to the bases 172, as illustrated in Fig. 1. The bases 172 support the front-wheel-side frame (vehicle body frame) 111 with the pair of springs 161 interposed therebetween. In addition, the front-wheel-side vehicle body 110 has a front-wheel-side cover 110a. The front-wheel-side cover 110a is provided to cover at least part of the front-wheel-side frame 111 and is utilized as a protection of the front-wheel-side frame 111, a portion on which a passenger sitting on the seat unit 40 places his/her feet, a baggage placement portion, a mudguard, and the like.

The front-wheel-side frame 111 is made of a material suitable for obtaining strength, such as metal.

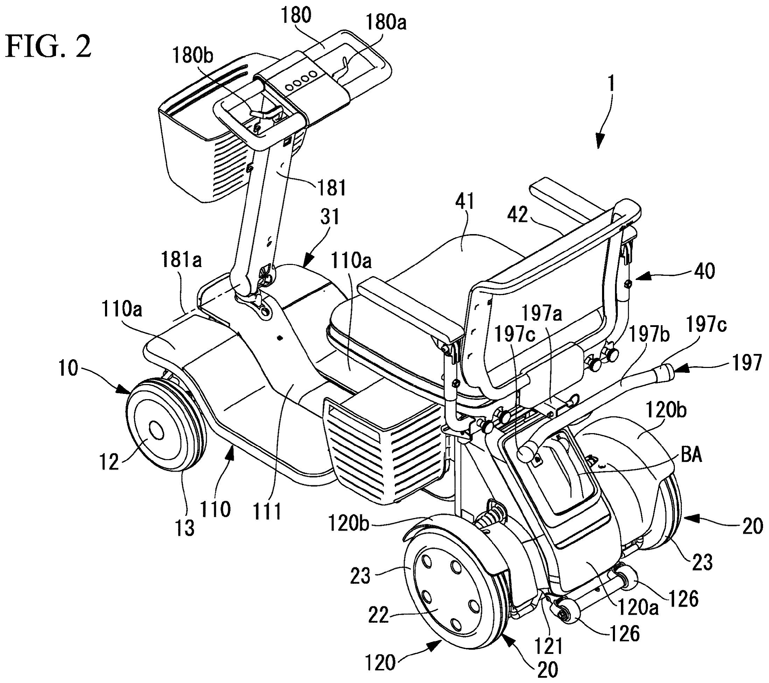

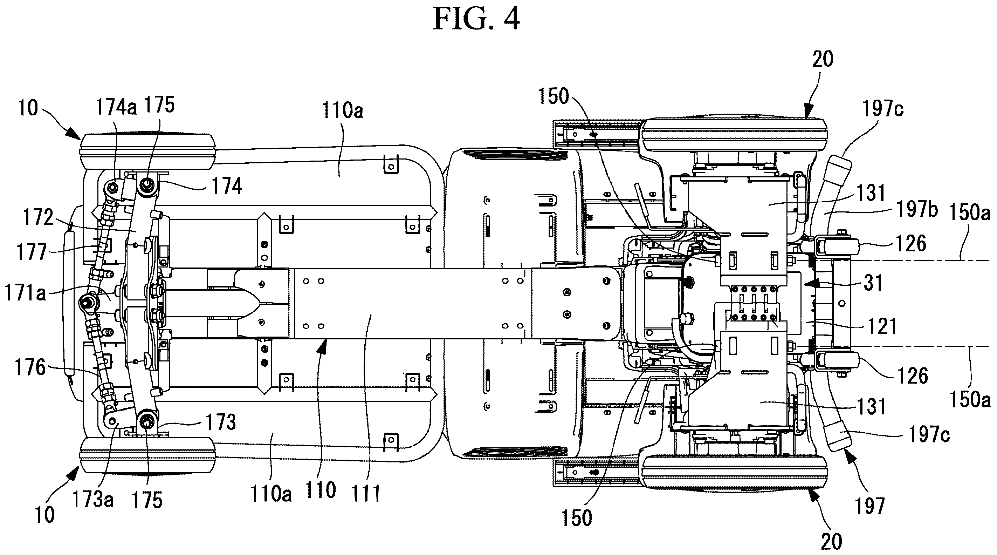

As illustrated in Fig. 2, Fig. 4, and the like, the rear-wheel-side vehicle body 120 has a rear-wheel-side frame (vehicle body frame) 121 and a rear-wheel-side cover 120a provided to cover at least part of the rear-wheel-side frame 121 and utilized as a protection for the rear-wheel-side frame 121, a mudguard, and the like. An overall vehicle body frame of the mobility main body 30 is formed by the front-wheel-side frame 111 and the rear-wheel-side frame 121.

The rear-wheel-side frame 121 is made of a material suitable for obtaining strength, such as metal.

In addition, as illustrated in Fig. 2 and the like, the rear-wheel-side frame 121 is detachably provided with a pair of fall prevention members 126 arranged in the width direction for preventing the electric mobility vehicle 1 from falling to a vehicle rear side.

In addition, as illustrated in Fig. 2, Fig. 3, Fig. 5, and the like, a rechargeable battery BA is detachably attached to the rear-wheel-side vehicle body 120.

The seat unit 40 has a seat surface portion 41 for a passenger to sit on and a backrest portion 42.

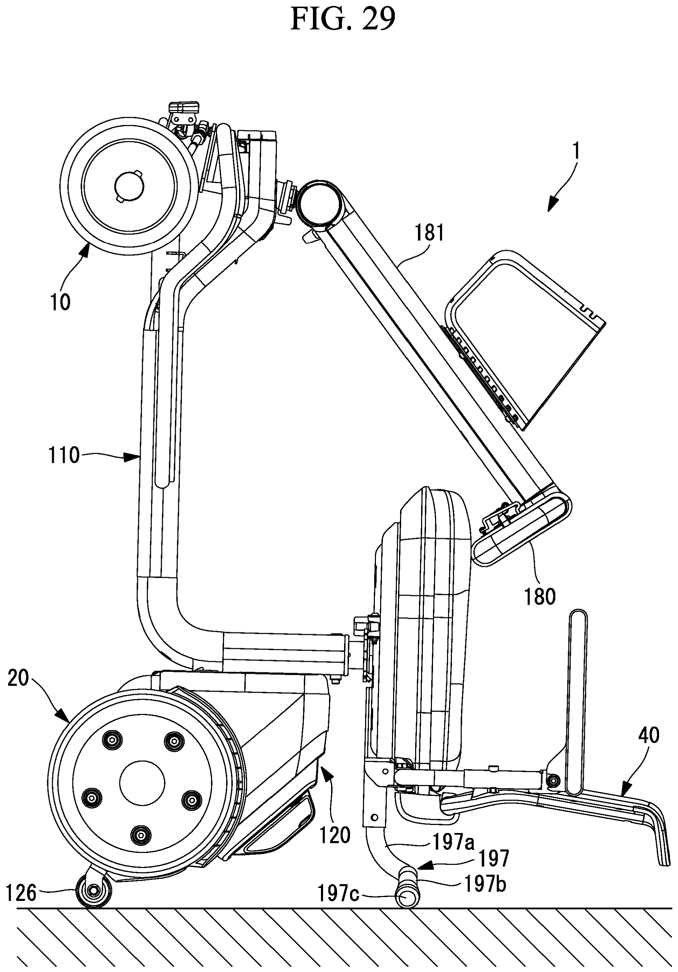

A center shaft 171 is attached to the front end side of the front-wheel-side frame 111 so as to be rotatable, and a handle shaft 181 is attached to an upper end of the center shaft 171 so as to be pivotable in the front-to-rear direction. The handle shaft 181 can be fixed at an upper tilting position illustrated in Figs. 1 to 3 and the like by an angle adjusting mechanism which will be described later and is pivotable to a lower tilting position illustrated in Fig. 29. A handle 180 is fixed to an upper end of the handle shaft 181, and the handle includes a first operation portion 180a and a second operation portion 180b, each of which is an operation lever, button, or the like. The passenger can move the operation portions 180a, 180b to the vehicle rear side.

When the operation portion 180a is operated when the handle shaft 181 is not at a rotational position for a spin turn which will be described later, a control device 80 which will be described later rotates the pair of rear wheels 20 in a forward traveling direction by means of both motors 50. In addition, when the operation portion 180b is operated when the handle shaft 181 is not at the rotational position for a spin turn, the control device 80 rotates the pair of rear wheels 20 in a backward traveling direction by means of both motors 50. When the operation portion 180a or the operation portion 180b is operated when the handle shaft 181 is at the rotational position for a spin turn, the control device 80 which will be described later rotates the pair of rear wheels 20 in directions opposite to each other by means of both motors 50.

The control device 80 is also capable of causing the electric mobility vehicle 1 to run by autonomous driving on the basis of a program without the passenger operating the handle 180, the operation portion 180a, the operation portion 180b, or the like.

A signal in accordance with an amount of displacement of the operation portion 180a, 180b is sent to a control unit 60 which will be described later, and the respective motors 50 are driven in accordance with the signal.

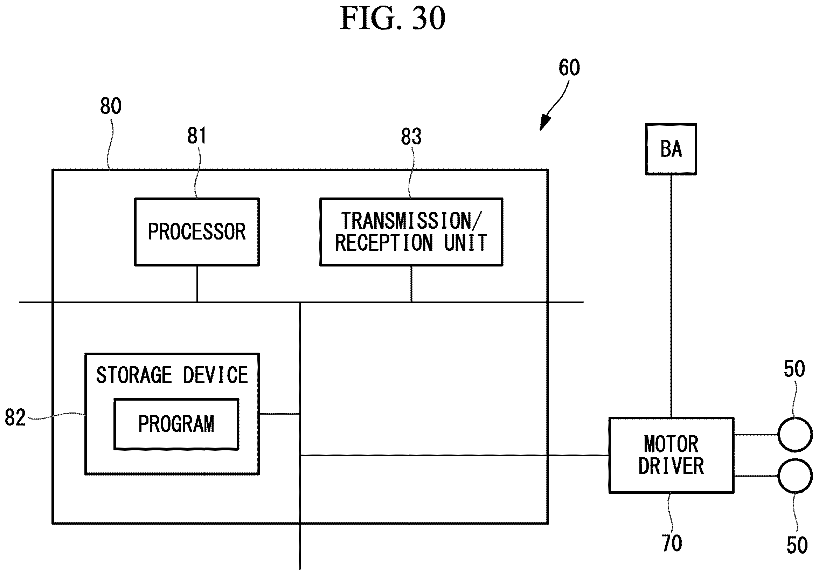

The control unit 60 has a motor driver 70 that drives the respective motors 50, and the control device 80 as illustrated in Fig. 30.

The control device 80 has a processor 81 having a CPU, RAM, and the like, for example, a storage device 82 having a non-volatile memory, a ROM, or the like, and a transmission/reception unit 83. The storage device 82 stores a program for controlling the electric mobility vehicle 1, and the processor 81 is operated on the basis of the program and sends a driving signal for driving the respective motors 50 to the motor driver 70.

The respective rear wheels 20 are attached to the rear-wheel-side vehicle body 120 through rear-wheel suspensions interposed therebetween. As illustrated in Fig. 7, the rear-wheel suspensions each have a swing base 131, and a spring 140 made of metal such as steel. The swing base 131 is formed by using a material suitable for obtaining strength, such as aluminum or another metal material. Part of the swing base 131 may be plastic. The electric mobility vehicle 1 of the present embodiment has a swing portion 2 including the swing base 131 and the motors 50 fixed to the swing base 131. The swing portion 2 is a portion that swings together with the swing base 131. The swing portion 2 may include still another component.

A base end side of the swing base 131 is attached to the rear-wheel-side frame 121 of the rear-wheel-side vehicle body 120 so as to be swingable in the up-down direction, and when the swing base 131 swings, a leading end of the swing base 131 moves in the up-down direction. The base end side of the swing base 131 is located at a center side in the width direction of a lower surface of the rear-wheel-side frame 121, and a leading end portion of the swing base 131 is located on an outer side in the width direction relative to the rear-wheel-side frame 121. In the present embodiment, a base end, a base end portion, and a base end side of the swing portion 2 are the base end, the base end portion, and the base end side of the swing base 131, and a leading end, a leading end portion, and a leading end side of the swing portion 2 are the leading end, the leading end portion, and the leading end side of the swing base 131.

More specifically, a pair of shaft supporting portions are provided on the lower surface of the rear-wheel-side frame 121, and each of the shaft supporting portions is provided with a through-hole extending in the front-to-rear direction. On the other hand, a shaft 150 extending in the front-to-rear direction is fixed to the base end side of the swing base 131 as illustrated in Fig. 4.

A bearing such as a sliding bearing is provided between the shaft 150 and the shaft supporting portion.

With the above-described configuration, the swing base 131 swings about a swing axis 150a (Figs. 4, 7, and the like) which is the center axis of the shaft 150.

Note that the shaft supporting portions may be provided on the base end side of the swing base 131, and the shaft 150 may be fixed to the lower surface of the rear-wheel-side frame 121.

As illustrated in Fig. 6 and Fig. 7, a rear-wheel supporting member 132 is provided on the leading end portion of the swing base 131. The rear-wheel supporting member 132 is a member provided on the leading end portion of the swing base 131. In addition, in the present embodiment, the swing base 131 and the rear-wheel supporting member 132 are formed integrally by subjecting a steel plate to pressing (such as bending or cutting), welding, or the like. In the case in which the rear-wheel supporting member 132 is fixed to the swing base 131, the rear-wheel supporting member 132 is part of the swing base 131. As illustrated in Fig. 6 and Fig. 7, the rear-wheel supporting member 132 extends upward from the leading end portion of the swing base 131, and in the present embodiment, a housing of the motor 50 is fixed to the rear-wheel supporting member 132 with a plurality of bolts.

The hub 22 of the rear wheel 20 is fixed to the output shaft 51 of the motor 50. The motor 50 and the rear wheel 20 are thereby supported on the leading end portion of the swing base 131.

In other words, the rear-wheel supporting member 132 supports the rear wheel 20 on the swing base 131 with the motor 50 interposed therebetween. Another mechanical element such as a bearing, an axle, another member, and the like may be fixed to the rear-wheel supporting member 132, so that the rear-wheel supporting member 132 may support the rear wheel 20 with the other mechanical element, the axle, the other member, and the like interposed therebetween.

In addition, there may be a case in which the housing of the motor 50 or the like is fixed to the leading end portion, an intermediate portion, or the like of the swing base 131. In this case, the rear wheel 20 is supported on the swing base 131 with the motor 50 interposed therebetween without providing the rear-wheel supporting member 132. In addition, another mechanical element such as a bearing, an axle, another member, and the like may be fixed to the leading end portion of the swing base 131, so that the leading end portion of the swing base 131 may support the rear wheel 20 with the other mechanical element, the axle, the other member, and the like interposed therebetween.

In any of the above-described cases, the rear wheel 20 is located on the leading end side of the swing base 131 and is supported on the swing base 131 so as to move in the up-down direction together with the leading end side of the swing base 131.

As illustrated in Fig. 7, stopper portions 128a, 128b are provided on the lower surface of the rear-wheel-side frame 121, and when the leading end portion of the swing base 131 moves downward, the base end portion of the swing base 131 abuts on the rear-wheel-side frame 121 from below with the stopper portion 128a interposed therebetween. The position will be a lower-limit swing position of the swing base 131.

On the other hand, when the leading end portion of the swing base 131 moves upward, the base end portion of the swing base 131 abuts on the rear-wheel-side frame 121 from below with the stopper portion 128b interposed therebetween. The position will be an upper-limit swing position of the swing base 131.

Note that there may be a case in which when the leading end portion of the swing base 131 swings downward, downward or upward swing of the swing base 131 is stopped by a force from the spring 140 without the base end portion of the swing base 131 abutting on the rear-wheel-side frame 121 or the like. In this case, a position at which the downward or upward swing of the swing base 131 is stopped by support of the spring 140 will be the lower-limit swing position or the upper-limit swing position.

A rear-wheel width W1 (Fig. 7) which is a distance in the width direction between an outer end of one of the rear wheels 20 and an outer end of the other rear wheel 20 and which is 450 to 650 mm in one example. In the present embodiment, the rear-wheel width W1 is 530 to 550 mm. In contrast to this, a swing axis width W2 (Fig. 7) which is a distance in the width direction between one of the swing axes 150a and the other swing axis 150a and which is 50 to 200 mm in one example. In the present embodiment, the swing axis width W2 is less than or equal to 120 to 130 mm.

Then, in the present embodiment, a distance from the swing axis 150a to the outer end of the rear wheel 20 is approximately 210 mm, and when the swing base 131 swings from the upper-limit swing position to the lower-limit swing position, the rear wheel 20 moves in the up-down direction by more than or equal to 25 mm. In order to improve comfortability of a passenger, the rear wheel 20 preferably is configured to move in the up-down direction by more than or equal to 15 mm relative to the vehicle body frame and more preferably moves by more than or equal to 20 mm, but they are not limited to those numerical values and a necessary suspension function should only be achieved.

As illustrated in Fig. 6, one end of the spring 140 is attached to the leading end portion of the swing base 131. In the present embodiment, the one end of the spring 140 is attached to the leading end portion of the swing base 131 with the rear-wheel supporting member 132 interposed therebetween. Note that the one end of the spring 140 may be attached to another portion of the swing base 131.

On the other hand, the other end of the spring 140 is attached to the rear-wheel-side frame 121.

In the present embodiment, an angle made by a direction in which the spring 140 extends with a width horizontal direction line is less than or equal to 20°. In one example, the width horizontal direction line is parallel to a straight line passing through a center point of the axle of one of the rear wheels 20 and a center point of the axle of the other rear wheel 20. In another example, the width horizontal direction line is parallel to a straight line passing through a center point in a radial direction of the axle of one of the front wheels 10 and a center point of the axle of the other front wheel 10.

The direction in which the spring 140 extends is, in one example, a straight line passing through the center in the radial direction of one end of the spring 140 and the center in the radial direction of the other end.

For example, the aforementioned angle is set in a range of 5° to 20°. If the aforementioned angle is less than or equal to 50°, a function may be similar to that of a case in which the aforementioned angle is 20°.

In addition, a publicly-known nonlinear spring preferably is used as the spring 140. In one example of the nonlinear spring, a winding pitch differs between one end side and the other end side thereof, and accordingly, a spring rate when compression progresses is higher than that at the start of compression. Another type of nonlinear spring may be used.

As described above, in the present embodiment, the spring 140 extends toward the vehicle width direction and extends diagonally downward from the inner side toward the outer side in the vehicle width direction.

When a force from a lower side is applied to each of the rear wheels 20 to move each of the rear wheels 20 upward relative to the rear-wheel-side frame 121, each of the springs 140 is compressed. At this time, a ratio of a force component in the horizontal direction to a force component in the up-down direction increases in a force applied from the other end of each of the springs 140 to the rear-wheel-side frame 121 since the springs 140 are located as described above. In other words, a force in the up-down direction is difficult to transmit from each of the springs 140 to the rear-wheel-side frame 121. Note that a damper located in parallel to the spring 140 can further be provided. In one example, a publicly-known damper such as an oil damper may be located in the spring 140. In another example, another biasing member such as an air cylinder may be provided instead of the spring (biasing member) 140. In this case, a biasing system having an air cylinder capable of supplying air to each of a base end side and a leading end side of a cylinder portion, a pump that supplies air to the cylinder portion, electronically controlled valves respectively provided on the base end side and the leading end side of the cylinder portion, and a control device can be employed. When the pump and the electronically controlled valves are controlled by the control device, an appropriate suspension function in accordance with the weight of the passenger can be achieved. The biasing member should only be a member that can apply a downward force to the swing portion 2 when the leading end side of the swing portion 2 moves upward.

The electric mobility vehicle 1 is required to be compact, lightweight, simple in structure, and durable, for example. Therefore, a space in which the suspensions, the springs, the dampers, and the like can be located is relatively small, so that the suspensions, the springs, the dampers, and the like cannot be enlarged in many cases. The above-described configuration is useful for effectively buffering a force from the lower side to be applied to the rear wheels 20 in a limited space.

Note that the force from the lower side is a force that the rear wheels 20 receive from a contact surface when a passenger rides on the seat unit 40, a force that the rear wheels 20 receive from irregularities of the ground surface when the electric mobility vehicle 1 runs, or the like.

In addition, in the present embodiment, the swing base 131 of the swing portion 2 extends from the swing axis 150a to the outer side in the vehicle width direction and extends from the swing axis 150a substantially toward the horizontal direction. In the present embodiment, when an angle made by a direction in which the swing base 131 or the swing portion 2 extends in the vehicle width direction with the horizontal direction is less than or equal to 35°, it can be said that the swing base 131 extends from the swing axis 150a substantially toward the horizontal direction. The aforementioned angle preferably is less than or equal to 25°, more preferably is less than or equal to 10°, and still more preferably is less than or equal to 5°.

Note that in one example, the direction in which the swing base 131 (the swing portion 2) extends is a direction passing through the center of the figure of a cross-section of the base end portion of the swing base 131 and the center of the figure of a cross-section of the leading end portion of the swing base 131. Each of the cross-sections is a cross-section obtained by cutting the swing base 131 along a plane extending in the vehicle front-to-rear direction and the up-down direction. In another example, the direction in which the swing base 131 extends is a direction in which a lower surface or an upper surface of the swing base 131 substantially extends.

In the present embodiment, the swing base 131 extends from the swing axis 150a slightly downward relative to the horizontal direction in a state in which a passenger has not ridden on the seat unit 40. Then, when the passenger rides on the seat unit 40, a state is obtained in which the swing base 131 swings upward against a reaction force of the springs 140, and the swing base 131 extends from the swing axis 150a slightly upward relative to the horizontal direction. In a case in which the passenger is lightweight, the swing base 131 becomes a state of extending from the swing axis 150a toward the horizontal direction or a state of extending slightly downward relative to the horizontal direction.

In this state, one end of the spring 140 is attached to the leading end portion of the swing base 131 with the rear-wheel supporting member 132 interposed therebetween, and the spring 140 extends toward the vehicle width direction as described above. Therefore, as the swing position of the swing base 131 approaches the upper-limit swing position, an amount of compression of the spring 140 relative to a unit swing amount of the swing base 131 increases. With this configuration, when a lightweight passenger rides, the amount of compression of the spring 140 relative to the unit swing amount of the swing base 131 is smaller than a case when a heavyweight passenger rides.

In addition, the spring 140 may be a nonlinear spring whose spring rate increases when compression progresses. In one example, the spring 140 is a nonlinear spring whose increased spring rate is more than or equal to 1.3 times and preferably is more than or equal to 1.5 times a spring rate before increasing.

In other words, the spring rate of the overall rear-wheel suspension changes in accordance with the weight of the passenger. Note that the effect in which the spring rate of the overall rear-wheel suspension changes in accordance with the weight of the passenger is obtained only by the configuration in which the spring 140 is a nonlinear spring.

As described above, since the spring rate of the overall rear-wheel suspension changes in accordance with the weight of the passenger, the swing base 131 is prevented from swing excessively when a heavyweight passenger rides. Such a configuration in which the spring rate changes in accordance with the weight provides a vibration-reduction effect and also contributes to the protection of each frame of the mobility body. Furthermore, when the electric mobility vehicle 1 pivots or turns, a great force is applied to the spring 140 of one of the pair of rear wheels 20. Here, the spring rate of the spring 140 becomes high when a great force is applied. For example, the spring rate is not increased when the electric mobility vehicle 1 is at a still state with a lightweight passenger riding thereon or traveling straight with the lightweight passenger riding thereon, and the spring rate of the rear-wheel suspension on the outer side increases when the electric mobility vehicle 1 pivots or turns. Therefore, a roll angle at the time of a pivot or turn is reduced, and the posture of the electric mobility vehicle 1 and the passenger becomes more stable.

In addition, in the present embodiment, the swing control portion 3 is provided to restrains or limit different direction motions in the up-down direction of the base end sides of the pair of swing portions 2, thereby restraining a rise of the leading end side of one of the pair of swing portions 2 relative to the other leading end side or limiting the rise to a predetermined range.

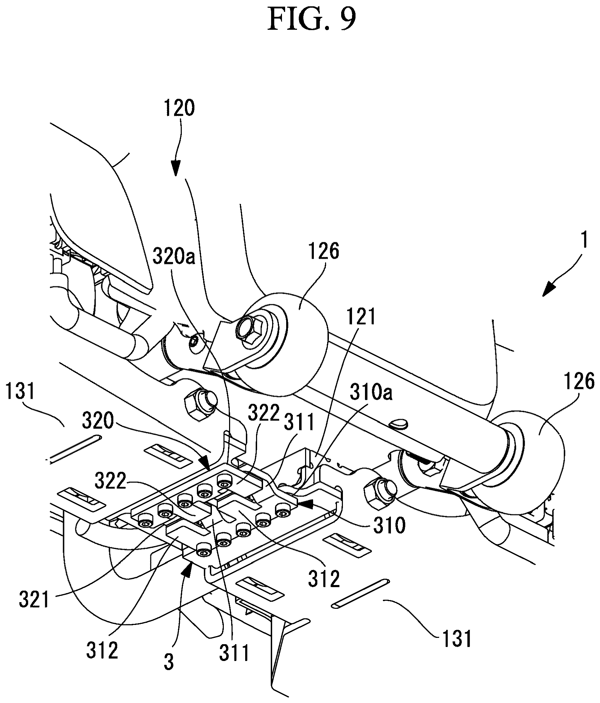

The swing control portion 3 of the present embodiment has a first member 310 and a second member 320 made using metal, rigid plastic, or the like as illustrated in Fig. 9 and the like. More preferably, the first member 310 and the second member 320 are formed using a spring material such as stainless steel or spring steel for use in manufacturing a spring such as a coil spring.

The first member 310 has a main body 310a fixed to the base end portion of one of the pair of swing bases 131 (right side one) with a bolt or the like, and the second member 320 has a main body 320a fixed to the base end portion of the other one of the pair of swing bases 131(left side one) with a bolt or the like.

The first member 310 has two or more upper contact portions 311 located at intervals from each other in the vehicle front-to-rear direction and two or more lower contact portions 312 located at intervals from each other in the vehicle front-to-rear direction.

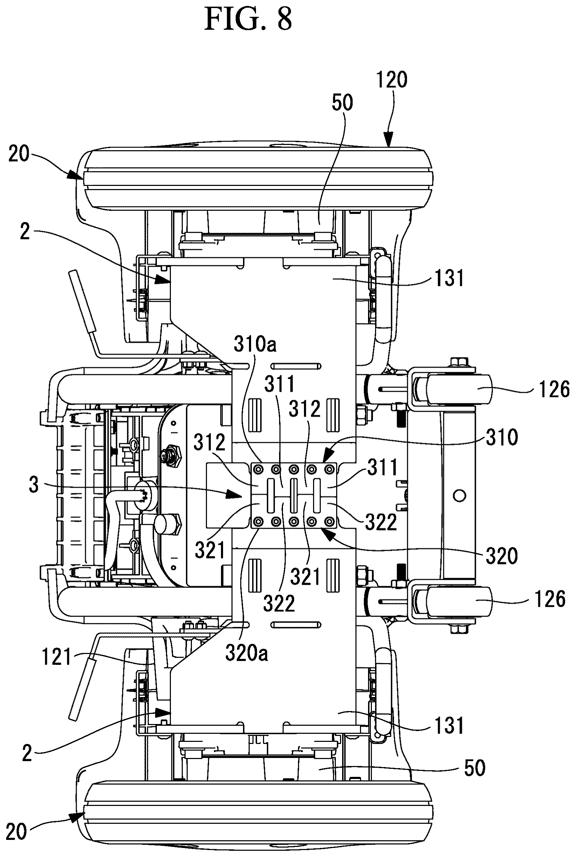

In the present embodiment, the respective contact portions 311, 312 extend from the main body 310a toward the inner side in the vehicle width direction, and the respective contact portions 311, 312 are fixed to the main body 310a. Alternatively, the respective contact portions 311, 312 are formed integrally with the main body 310a. As illustrated in Figs. 8, 9, and the like, the two or more upper contact portions 311 and the two or more lower contact portions 312 are aligned alternately in the vehicle front-to-rear direction. The two or more upper contact portions 311 are located above the two or more lower contact portions 312.

In addition, the second member 320 has two or more upper contact portions 321 located at intervals from each other in the vehicle front-to-rear direction and two or more lower contact portions 322 located at intervals from each other in the vehicle front-to-rear direction.

In addition, the respective contact portions 321, 322 extend from the main body 320a toward the inner side in the vehicle width direction, and the respective contact portions 321, 322 are fixed to the main body 320a. Alternatively, the respective contact portions 321, 322 are formed integrally with the main body 320a. As illustrated in Figs. 8, 9, and the like, the two or more upper contact portions 321 and the two or more lower contact portions 322 are aligned alternately in the vehicle front-to-rear direction. The two or more upper contact portions 321 are located above the two or more lower contact portions 322.

The first member 310 and the second member 320 are respectively fixed to the pair of swing bases 131 (Fig. 9) such that the two or more upper contact portions 311 of the first member 310 and the two or more lower contact portions 322 of the second member 320 are aligned in the up-down direction and such that the two or more lower contact portions 312 of the first member 310 and the two or more upper contact portions 321 of the second member 320 are aligned in the up-down direction. When the left and right rear wheels 20 which are movable in the up-down direction are located at equivalent height positions relative to the vehicle body frame as described above, that is, when the leading end sides of the pair of swing bases 131 (the swing portions 2) are located at equivalent height positions relative to the vehicle body frame, the first member 310 and the second member 320 do not come into contact, or the first member 310 and the second member 320 are in light contact in a state in which they are not engaged with each other in the up-down direction. The leading end sides of the swing bases 131 (the swing portions 2) are specific portions of the leading ends of the swing bases 131, for example.

Here, the height positions can be measured relative to a reference plane (reference height position) based on a reference element, reference shape, reference position, and the like of the rear-wheel-side vehicle body 120. The reference element is, for example, part or the whole of the lower surface of the rear-wheel-side frame 121 in the vehicle body frame, the pair of fall prevention members 126, their center axes, or the like. The reference shape is, for example, one or more characteristics shapes in the rear-wheel-side frame 121. The reference position is, for example, a height position of the specific portions of the rear wheels 20 or the swing bases 131 relative to the vehicle body frame, measured in the electric mobility vehicle 1 to which any load is not applied and which is in a still stae.

For example, in the case of the reference element, the reference plane (reference height position) can be set with reference to one or more grooves, protrusions, planes, or the like extending horizontally in the vehicle width direction of the lower surface of the rear-wheel-side frame 121 or holes, grooves, protrusions, planes, or the like aligned in the vehicle width direction of the lower surface of the rear-wheel-side frame 121. Setting can also be performed similarly in the cases of the reference shape and the reference position.

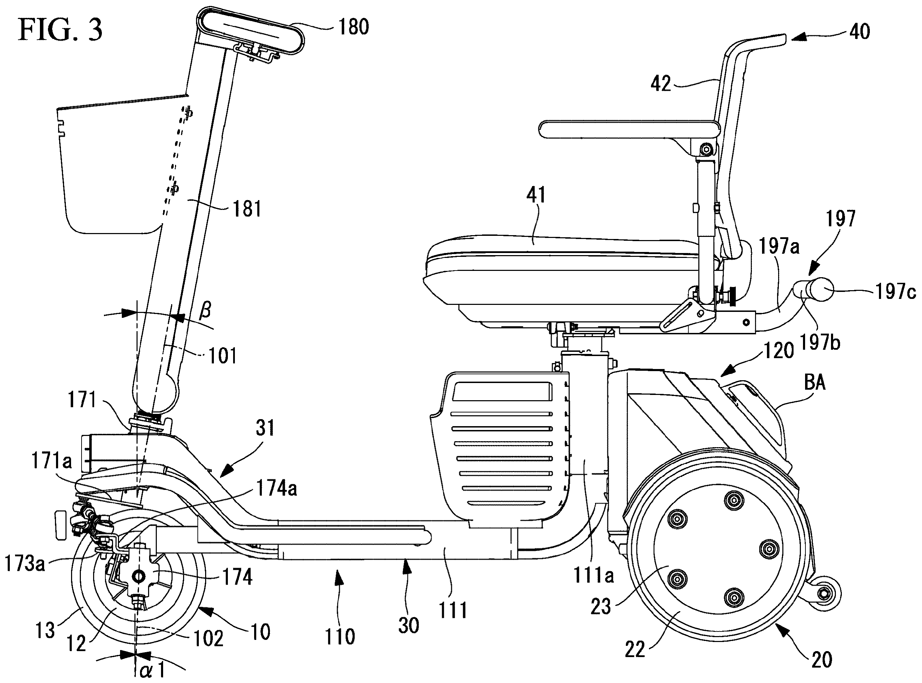

There are cases in which a centrifugal force works on the electric mobility vehicle 1 when the electric mobility vehicle 1 makes a pivot or turn, and a large load is applied to the rear wheel 20 on the outer side of the pivot or turn, of the pair of rear wheels 20. In this case, a behavior tilting to the outer side of the pivot or turn occurs in the electric mobility vehicle 1 as indicated by an arrow illustrated in Fig. 3. The behavior is referred to as rolling in some cases. The tilting behavior occurs also when the passenger places his/her weight on one side in the vehicle width direction. For example, the passenger sitting on the electric mobility vehicle 1 at a stop state may place his/her weight on one side in the vehicle width direction in order to take an article present beside the electric mobility vehicle 1.

In addition, the tilting behavior also occurs when the passenger places his/her weight on one side in the vehicle width direction while standing on the footrest.

In the case in which soft rear-wheel suspensions are used for improving comfortability of the passenger as described above, the tilting behavior is likely to occur.

The tilting behavior can also be said to be a behavior in a rotational direction about an axis extending in the vehicle front-to-rear direction.

In the present embodiment, the height position of the leading end side of one of the pair of swing portions 2 becomes higher than the height position of the leading end side of the other swing portion 2 due to the tilting behavior. For example, when a difference between the two height positions reaches 10 mm which is a predetermined difference, the two or more upper contact portions 311 and the two or more lower contact portions 322 come into contact in the up-down direction. At this time, in the present embodiment, the two or more lower contact portions 312 of the first member 310 and the two or more upper contact portions 321 of the second member 320 also come into contact in the up-down direction. The contact limits movement of the first member 310 and the second member 320 relative to each other in the up-down direction. In other words, the difference between the height position of the leading end side of one of the pair of swing portions 2 and the height position of the leading end side of the other swing portion 2 is restrained or limited from increasing beyond the predetermined difference. More specifically, the difference between the height position of the leading end side of one of the pair of swing portions 2 and the height position of the other leading end side is limited to a predetermined range of 10 mm.

The predetermined range can be set as appropriate. A specific numerical value varies in accordance with the size of the electric mobility vehicle 1 or the like. When the predetermined range is set at a relatively small range of 2 to 10 mm, for example, the electric mobility vehicle 1 is less likely to roll. When the predetermined range is set at a relatively large range exceeding 10 mm, flexibility of the motion of tilting the electric mobility vehicle 1 when making a turn increases.

The configuration can reduce the tilting behavior while achieving soft rear-wheel suspensions for improving comfortability of the passenger as described above. This also leads to a rise in running performance of the electric mobility vehicle 1 and also leads to further improvement of comfortability of the passenger.

Note that in the case in which the first member 310 and the second member 320 are formed using a spring material as described above, a configuration can be employed in which the upper contact portions 311 and/or the lower contact portion 322 can be deformed within a range of elastic deformation in accordance with a force applied to a contact portion of the upper contact portions 311 and the lower contact portion 322 in the up-down direction when the upper contact portions 311 and the lower contact portion 322 come into contact in the up-down direction. In this case, a force of 500N, 1000N, or the like is applied to the contact portion in the up-down direction, for example, and leading ends of the upper contact portions 311 and/or leading ends of the lower contact portion 322 can be displaced accordingly by more than or equal to 0.3 mm, more than or equal to 0.5 mm, or more than or equal to 1 mm in the up-down direction. With the configuration, it is expected that limit of displacement of the swing portion 2 is relaxed and that the members 310, 320 are less likely to collapse (less likely to permanently set).

Note that the first member 310 may be provided with a single upper contact portion 311 and a single lower contact portion 312, and the second member 320 may be provided with a single upper contact portion 321 and a single lower contact portion 322. Also in this case, functions and effects described above may be similarly achieved.

In addition, the second member 320, for example, can be omitted, and the above-described effects can also be achieved only with the first member 310. In this case, part of the base end portion of the other swing base 131 is located below the two or more upper contact portions 311 of the first member 310 fixed to the base end portion of one of the swing bases 131. In addition, part of the base end portion of the other swing base 131 is located above the two or more lower contact portions 312 of the first member 310. When the part of the base end portion functions similarly to the second member 320, the above-described effects are achieved.

Part or the whole of the first member 310 and the second member 320 can be part of the base end portions of the swing bases 131. For example, the upper contact portions 311 and the lower contact portions 312 may be provided integrally on the base end side of one of the swing bases 131, and the upper contact portions 321 and the lower contact portion 322 may be provided integrally on the base end side of the other swing base 131.

Alternatively, a hole or notch may be formed in the base end side of one of the swing bases 131, and a protruding portion inserted in the hole or notch may be formed on the base end side of the other swing base 131. An upper end surface of the hole or notch functions as an upper contact portion that comes into contact with the protruding portion from above, and a lower end surface of the hole or notch functions as a lower contact portion that comes into contact with the protruding portion from below.

As described above, in order to limit different-direction swing in which the base end side of one of the pair of swing portions 2 swings in a direction different from the other in the up-down direction, the base end side of at least one of the swing portions 2 should only be provided with an upper contact portion that comes into contact with the base end side of the other swing portion 2 from above and a lower contact portion that comes into contact therewith from below.

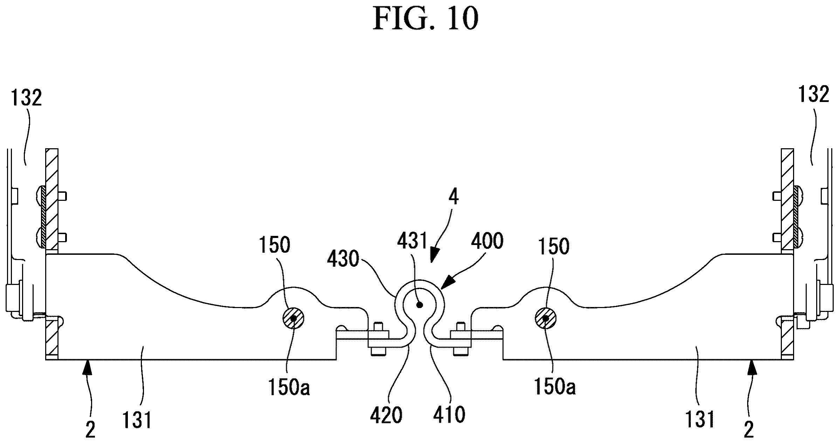

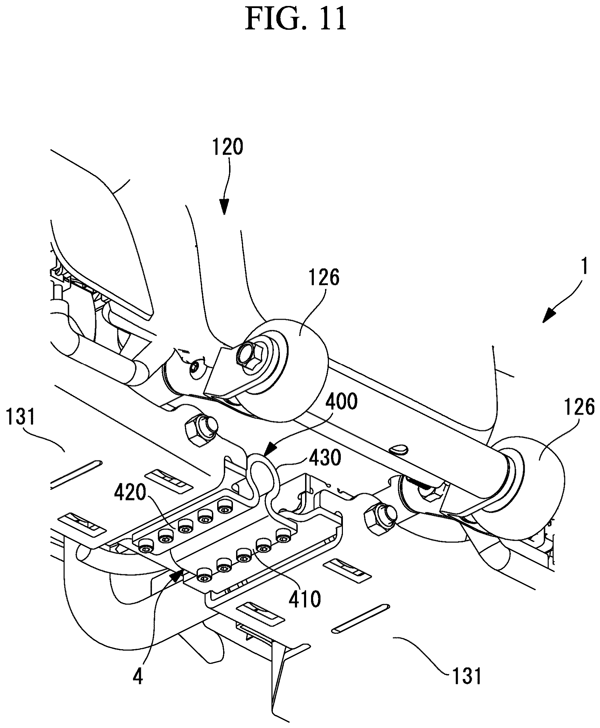

A swing control portion 4 illustrated in Figs. 10 and 11 can also be used instead of the swing control portion 3 of the present embodiment described above.

The swing control portion 4 has a connecting member 400 having a first fixed portion 410 fixed to the base end side of one of the pair of swing bases 131 with bolts or the like and a second fixed portion 420 fixed to the base end side of the other one of the pair of swing bases 131 with bolts or the like. The swing control portion 4 may have another member in addition to the connecting member 400.

The connecting member 400 has a force generating portion 430 made of metal, rigid plastic, or the like that connects the first fixed portion 410 and the second fixed portion 420. The force generating portion 430 has an elastically deformable shape. One end of the force generating portion 430 is a portion coupled to the first fixed portion 410, and the other end of the force generating portion 430 is a portion coupled to the second fixed portion 420.

One example of the elastically deformable shape is a shape located across a range of more than or equal to 170° about an axis 431 extending in the vehicle front-to-rear direction as in Fig. 10. The axis 431 is located within a range surrounded by the force generating portion 430 and extends in the vehicle front-to-rear direction. Therefore, the elastically deformable shape is usually a shape located across a range of more than or equal to 180° about the axis 431.

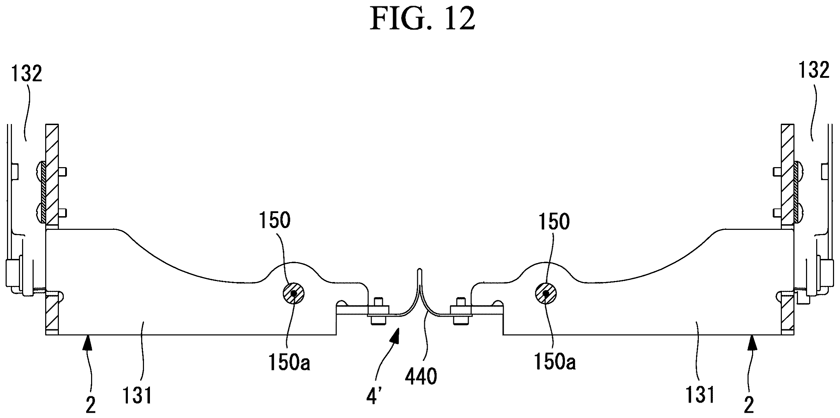

As a cross-sectional shape of the force generating portion 430, various shapes such as, for example, a shape made from a single arc, a shape obtained by connecting two or more arcs, a shape obtained by connecting one or more arcs and one or more straight lines, and the like, a shape obtained by removing a partial side of a polygon, and the like may be employed. The cross-sectional shape is a shape of a cross-section obtained by cutting the force generating portion 430 along a plane perpendicular to the vehicle front-to-rear direction. Part or the whole of the arc may be an arc having a center of curvature outside the force generating portion 430. The force generating portion 430 in Fig. 10 has a cross-sectional shape obtained by connecting two or more arcs. In addition, the force generating portion 440 in Fig. 12, which is a swing control portion 4', of a modification has a cross-sectional shape obtained by connecting two or more arcs having centers of curvature outside the force generating portion 440.

Since the force generating portions 430, 440 have the above-described configurations, first deformation in which one end and the other end of the force generating portion 430, 440 are displaced from each other in the horizontal direction occurs, when same-direction swing in which the base end sides of the pair of swing bases 131 swings together upward or downward occurs. As described, when the same-direction swing in which the pair of swing bases 131 swing in the same direction occurs, the force generating portion 430, 440 having the above-described shape applies a relatively small reaction force to the base end sides of the pair of swing bases 131.

On the other hand, when the different-direction swing in which the base end side of one of the pair of swing bases 131 swings upward or downward relative to the other base end side occurs, second deformation in which one end and the other end of the force generating portion 430, 440 are displaced from each other in the up-down direction occurs. As described, the force generating portion 430, 440 is deformed in a mode different from that of the same-direction swing. In the present embodiment, when compared with a ratio (a first spring constant) of a force from the force generating portion 430, 440 to an amount of deformation in the first deformation in the same-direction swing, a ratio (a second spring constant) of a force from the force generating portion 430, 440 to an amount of deformation in the second deformation in the different-direction swing is at least three times greater and more preferably is at least five times greater. The ratio should only be more than or equal to 1.5 times. The ratio of the second spring constant to the first spring constant is not limited to the above value, as long as it can reduce the tilting behavior as described above. The same applies to the following description.

Therefore, the swing control portion 4, 4' restrains the different-direction swing in which one of the base end sides of the pair of swing portions 2 swings in a direction different from the other in the up-down direction. The configuration can restrain or limit the difference between the height position of the leading end side of one of the pair of swing portions 2 relative to the vehicle body frame and the height position of the other leading end side relative to the vehicle body frame from increasing beyond the predetermined range. In the case of restraint, the force generating portion 430, 440 generates a sufficiently great force before the difference exceeds the predetermined range, and the difference is less likely to exceed the predetermined range accordingly. The same applies to the case of another force generating portion.

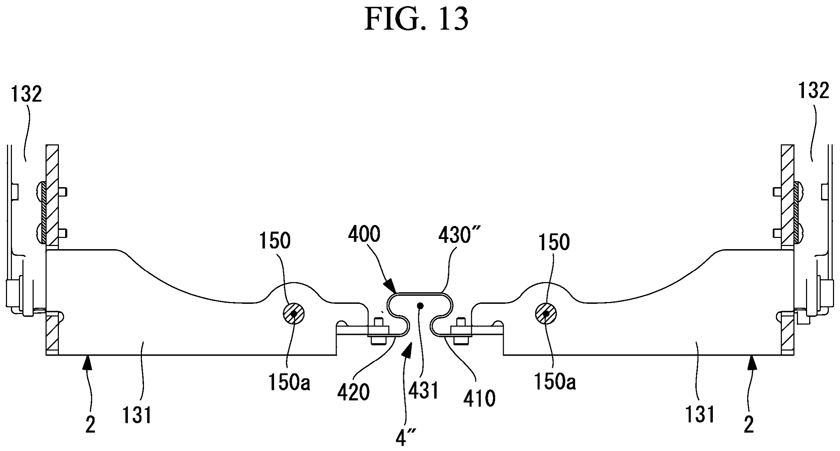

A swing control portion 4" illustrated in Fig. 13 obtained by changing the shape of the force generating portion 430 of the swing control portion 4 of the present embodiment can also be used.

The swing control portion 4" also has a force generating portion 430" having an elastically deformable shape. The force generating portion 430" also has a shape located across a range of more than or equal to 170° about the axis 431 and has a cross-sectional shape obtained by connecting two or more arcs.

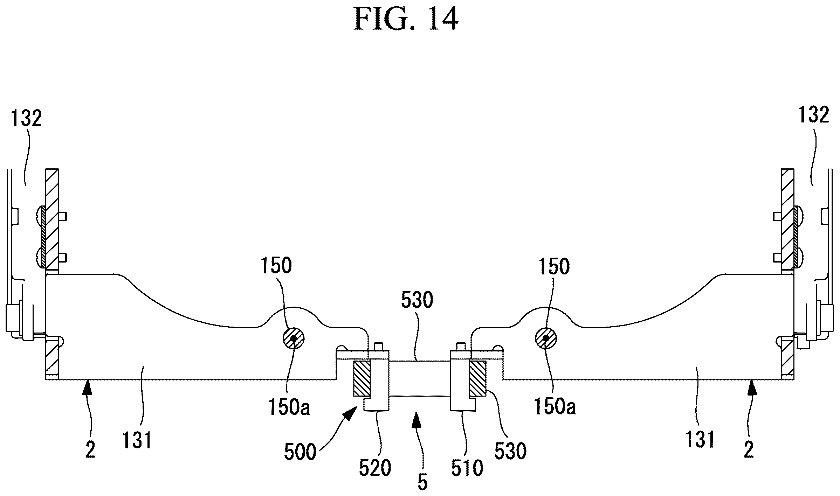

A swing control portion 5 illustrated in Fig. 14 can also be used instead of the swing control portion 3 of the present embodiment.

The swing control portion 5 has a connecting member 500 having a first fixed portion 510 fixed to the base end side of one of the pair of swing bases 131 with a bolt or the like and a second fixed portion 520 fixed to the base end side of the other one of the pair of swing bases 131 with a bolt or the like. The swing control portion 5 may have another member in addition to the connecting member 500.

The connecting member 500 has a force generating portion 530 made of a threadlike member, string-like member, band-like member, or the like that connects the first fixed portion 510 and the second fixed portion 520. The force generating portion 530 of the present embodiment is made by winding a thread made of polyester fibers, nylon fibers, aramid fibers, or the like around the first fixed portion 510 and the second fixed portion 520 by a plurality of times. The threadlike member and the string-like member can be made using chemical fibers such as polyester fibers, nylon fibers, or aramid fibers, natural fibers, metal fibers, or the like. The band-like member can be made using metal, plastic, rubber, or the like. The force generating portion 530 of the present embodiment may have rubber-like elasticity that covers the force generating portion 530.

Since the connecting member 500 has the above-described configuration, first deformation in which the first fixed portion 510 side and the second fixed portion 520 side of the force generating portion 530 are displaced from each other in the horizontal direction occurs in the force generating portion 530 in the same-direction swing. The length of the force generating portion 530 between the first fixed portion 510 and the second fixed portion 520 is set such that a strong tension is not produced in the deformation.

On the other hand, in the different-direction swing, second deformation in which the first fixed portion 510 side and the second fixed portion 520 side of the force generating portion 530 are displaced from each other in the up-down direction occurs in the force generating portion 530. In the present embodiment, a ratio (the second spring constant) of a force (tension) from the force generating portion 530 to an amount of deformation in the second deformation in the different-direction swing is at least three times greater and more preferably is at least five times greater than a ratio (the first spring constant) of a force (tension) from the force generating portion 530 to an amount of deformation in the first deformation in the same-direction swing. The ratio should only be more than or equal to 1.5 times. The ratio is not limited to these values as described above. Note that the amount of deformation can also be said to be an amount of displacement (a change in distance) of the first fixed portion 510 relative to the second fixed portion 520.

Therefore, the swing control portion 5 restrains or limits the different-direction swing in which one of the base end sides of the pair of swing portions 2 swings in a direction different from the other in the up-down direction. The configuration restrains or limits the difference between the height position of the leading end side of one of the pair of swing portions 2 relative to the vehicle body frame and the height position of the other leading end side relative to the vehicle body frame from increasing beyond the predetermined difference.

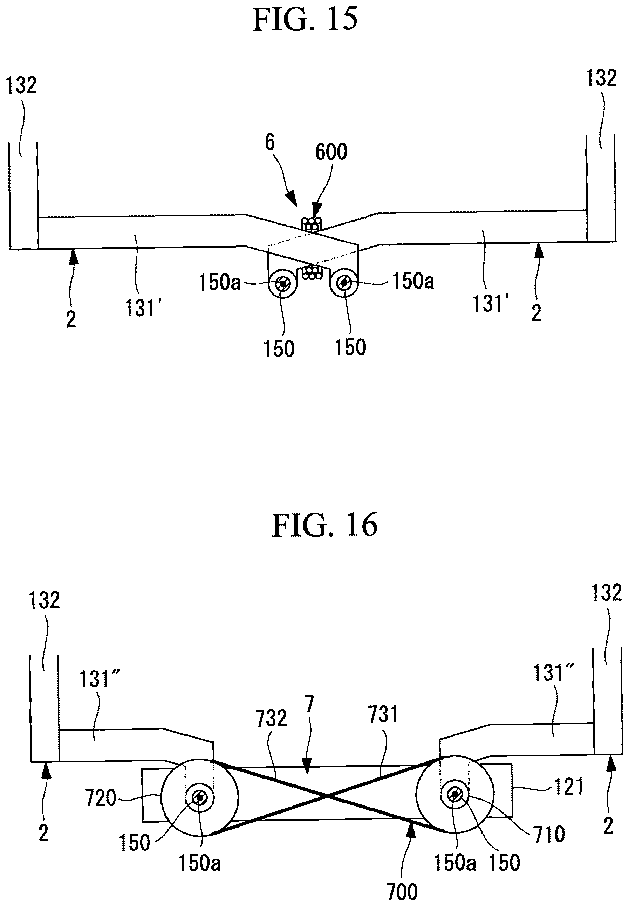

Swing bases 131' in Fig. 15 can also be provided with a swing control portion 6**.** Configurations equivalent to those of the above-described embodiment are denoted by the same reference numerals in Fig. 15. In Fig. 15, the shaft 150 fixed to a base end side of the right swing base 131' is located on the left side relative to the shaft 150 fixed to a base end side of the left swing base 131'.

The swing control portion 6 has a connecting member 600 that connects the base end side of the right swing base 131' and the base end side of the left swing base 131'. The swing control portion 6 may have another member in addition to the connecting member 600.

The connecting member 600 can also be said to be a force generating portion made of a threadlike member, a string-like member, a band-like member, or the like that connects the base end side of the right swing base 131' and the left swing base 131'. The force generating portion can be made of a material, member, and the like similar to those of the force generating portion 530.

Since the connecting member 600 has the above-described configuration, a change in distance (first deformation) between both ends in the up-down direction of the force generating portion is small in the same-direction swing. The length of the force generating portion is set such that a strong tension is not produced at this time.

On the other hand, in the different-direction swing, the distance between the both ends in the up-down direction of the force generating portion largely changes (second deformation). In the present embodiment, a ratio (the second spring constant) of a force (tension) from the force generating portion to the amount of deformation in the second deformation in the different-direction swing is at least three times greater and more preferably is at least five times greater than a ratio (the first spring constant) of a force (tension) from the force generating portion to the amount of deformation in the first deformation in the same-direction swing. The ratio should only be more than or equal to 1.5 times. The ratio is not limited to these values as described above. Note that the amount of deformation can also be said to be an amount of displacement (a change in distance) of the upper end of the force generating portion relative to the lower end.

Therefore, the swing control portion 6 restrains or limits the different-direction swing in which one of the base end sides of the pair of swing portions 2 swings in a direction different from the other in the up-down direction. The configuration restrains or limits the difference between the height position of the leading end side of one of the pair of swing portions 2 relative to the vehicle body frame and the height position of the other leading end side relative to the vehicle body frame from increasing beyond the predetermined difference.

Swing bases 131" in Fig. 16 can also be provided with a swing control portion 7. Configurations equivalent to those of the above-described embodiment are denoted by the same reference numerals in Fig. 16. In Fig. 16, the shaft 150 fixed to a base end side of the right swing base 131" and the shaft 150 fixed to a base end side of the left swing base 131" are spaced by a predetermined distance in the vehicle width direction. Although in Fig. 16, the rear-wheel supporting member 132 is fixed to the swing base 131", a lower end of the rear-wheel supporting member 132 may be coupled to the swing base 131" so as to be swingable in the vehicle width direction like a double wishbone suspension. In this case, an upper end of the rear-wheel supporting member 132 is coupled to an upper side swing base, which is not illustrated, so as to be swingable in the vehicle width direction according to necessity.

The swing control portion 7 has a connecting member 700 having a first fixed portion 710 fixed to the base end side of one of the pair of swing bases 131" with a bolt or the like and a second fixed portion 720 fixed to the base end side of the other one of the pair of swing bases 131" with a bolt or the like. The swing control portion 7 may have another member in addition to the connecting member 700. In one example, each of the fixed portions 710, 720 is a pulley fixed to the swing base 131" coaxially with the swing axis 150a. The connecting member 700 also functions as a force generating portion.

The connecting member 700 has force generating portions 731, 732 made of threadlike members, string-like members, band-like members, or the like that connect the first fixed portion 710 and the second fixed portion 720. The force generating portions 731, 732 of the present embodiment are band-like members that can be formed similarly to the force generating portion 530. One end of the force generating portion 731 is fixed to an upper end portion of the fixed portion 710, and the other end of the force generating portion 731 is fixed to a lower end portion of the fixed portion 720. One end of the force generating portion 732 is fixed to a lower end portion of the fixed portion 710, and the other end of the force generating portion 732 is fixed to an upper end portion of the fixed portion 720.

Since the connecting member 700 has the above-described configuration, the first fixed portion 710 and the second fixed portion 720 rotate in directions different from each other in the same-direction swing, and first deformation occurs in the force generating portions 731, 732 in accordance with the rotation. The lengths of the force generating portions 731, 732 between the first fixed portion 710 and the second fixed portion 720 are set such that a strong tension is not produced in the deformation.

On the other hand, the first fixed portion 710 and the second fixed portion 720, for example, rotate in the same direction in the different-direction swing, and second deformation in which one of the force generating portions 731, 732 is stretched more largely than in the first deformation because of the rotation.

Therefore, in the second deformation, the swing control portion 7 restrains or limits the first fixed portion 710 and the second fixed portion 720 from rotating about the swing axes 150a with a force greater than that in the first deformation. This restrains or limits the different-direction swing in which one of the base end sides of the pair of swing portions 2 swings in a direction different from the other in the up-down direction. The configuration restrains or limits the difference between the height position of the leading end side of one of the pair of swing portions 2 relative to the vehicle body frame and the height position of the other leading end side relative to the vehicle body frame from increasing beyond the predetermined difference.

Note that in the swing control portion 7, the first fixed portion 710 and the second fixed portion 720 can be gears such as spur gears rather than pulleys, and the first fixed portion 710 and the second fixed portion 720 which are gears can also be meshed with each other. In this case, the first fixed portion 710 and the second fixed portion 720 meshed with each other permit the same-direction swing and limit the different-direction swing.

One or more gears can also be provided between the first fixed portion 710 and the second fixed portion 720. In this case, it can be configured such that rotation of the first fixed portion 710 is transmitted to the second fixed portion 720 via the one or more gears and such that the one or more gears permit the same-direction swing and limits the different-direction swing. In addition, a member such as a rod or plate extending in the up-down direction can also be provided instead of the one or more gears, and rack gears extending in the up-down direction can also be provided on both left and right ends of the member. In this case, when the member is attached to the vehicle body frame with a linear guide or the like so as to be movable only in the up-down direction, the member permits the same-direction swing and limits the different-direction swing.

Note that each of the aforementioned swing control portions controls the tilting behavior that occurs during running, when a user stands up on the footrest, and the like as described above and contributes to stabilization of a vehicle attitude, and thus can also be referred to as a stabilizer.

Note that in a case of an aspect in which the swing control portion connects the pair of swing portions 2 like the connecting member 400 of the swing control portion 4, the force generating portion 430, 430", 440 may assist or replace the springs 140 by means of adjusting the spring constant of the force generating portion 430, 430", 440 in the same-direction swing. In other words, the swing control portion also has the function of a suspension spring together with the function of the stabilizer.

The pair of front wheels 10 are steered by a steering mechanism. The steering mechanism of the present embodiment has, as illustrated in Figs. 1, 4, and the like, the center shaft 171, the base 172, a right knuckle 173 attached to a right side in the vehicle width direction of the base 172, a left knuckle 174 attached to a left side in the vehicle width direction of the base 172, and a pair of kingpins 175. The base 172 is composed of a single member or two or more members.

The center shaft 171 is attached to the front-wheel-side frame 111 so as to be rotatable about a first axis 101, and the center shaft 171 has a pitman arm 171a extending in a direction crossing the first axis 101. In the present embodiment, the pitman arm 171a extends in a direction substantially perpendicular to the first axis 101 but, without being limited thereto, may be set as appropriate in a range in which effects which will be described later will be achieved. In the present embodiment, a base end portion of the pitman arm 171a is fixed to the center shaft 171 with a bolt, by welding, or the like.

The right knuckle 173 and the left knuckle 174 are attached to the base 172 so as to be rotatable about second axes 102 which are center axes of the kingpins 175, and the right knuckle 173 and the left knuckle 174 respectively have a right knuckle arm 173a and a left knuckle arm 174a extending in directions crossing the second axes 102. In the present embodiment, the knuckle arms 173a, 174a extend in directions substantially perpendicular to the second axes 102 but, without being limited thereto, may be set as appropriate in a range in which at least one of the effects which will be described later will be achieved. In the present embodiment, base end portions of the knuckle arms 173a, 174a are fixed to the knuckles 173, 174 with bolts, through welding, or the like.

The steering mechanism has a right rod 176 that connects a leading end portion of the pitman arm 171a and a leading end portion of the right knuckle arm 173a, and a left rod 177 that connects the leading end portion of the pitman arm 171a and a leading end portion of the left knuckle arm 174a.

With the above-described configuration, a link mechanism at least having four joints including a first coupling portion of the center shaft 171 having the pitman arm 171a and the front-wheel-side frame 111, a second coupling portion of the base 172 and the right knuckle 173, a third coupling portion of the leading end portion of the right knuckle arm 173a and one end of the right rod 176, and a fourth coupling portion of an opposite end of the right rod 176 and the leading end portion of the pitman arm 171a is configured.

In addition, a link mechanism at least having four joints including a fifth coupling portion of the center shaft 171 having the pitman arm 171a and the front-wheel-side frame 111, a sixth coupling portion of the base 172 and the left knuckle 174, a seventh coupling portion of the leading end portion of the left knuckle arm 174a and one end of the left rod 177, and an eighth coupling portion of an opposite end of the left rod 177 and the leading end portion of the pitman arm 171a is configured. The fifth coupling portion is the same as the first coupling portion.

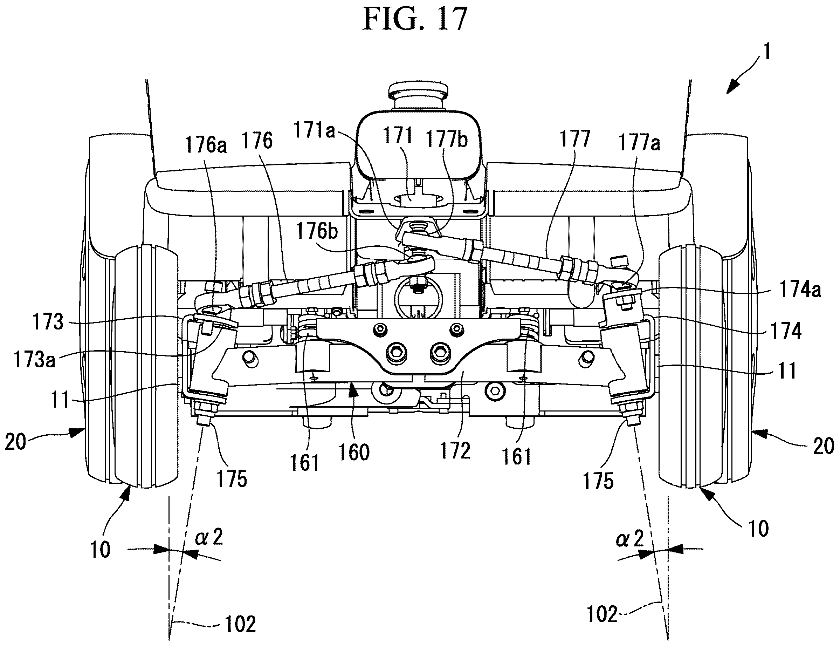

As illustrated in Fig. 17, one ends of the rods 176, 177 are joint components 176a, 177a such as universal joints which are typically ball joints, and the rods 176, 177 are coupled to the knuckle arms 173a, 174a with the joint components 176a, 177a interposed therebetween. In addition, the other ends of the rods 176, 177 are also joint components 176b, 177b such as universal joints which are typically ball joints, and the rods 176, 177 are coupled to the pitman arm 171a with the joint components 176b, 177b interposed therebetween. The length of the rod 176 is a distance between a center point of a spherical portion of the joint component 176a (a pivot center of the joint) and a center point of a spherical portion of 176b (a pivot center of the joint), and the same applies to the length of the rod 177. The rods 176, 177 are 165 to 175 mm in the present embodiment, but the present disclosure is not limited thereto.

In the present embodiment, the third coupling portion is the center point of the spherical portion of the joint component 176a (the pivot center of the joint), and the fourth coupling portion is the center point of the spherical portion of the joint component 176b (the pivot center of the joint). The same applies to the seventh coupling portion and the eighth coupling portion.

In the present embodiment, as illustrated in Figs. 1, 17, and the like, the joint components 176b and 177b are overlapped in the up-down direction. More specifically, the joint components 176b and 177b are aligned in the direction in which the first axis 101 extends. The other ends of the rods 176, 177 may be overlapped in the up-down direction, and the other ends of the rods 176, 177 may be aligned in the direction in which the first axis 101 extends. The configuration is useful for an increase in a pressing amount associated with a change in rod angle which will be described later.

In the present embodiment, as illustrated in Fig. 3, the kingpin 175 is inclined in the vehicle front-to-rear direction. In the present embodiment, an inclination angle (caster angle) α1 of the second axis 102 of the kingpin 175 in the vehicle front-to-rear direction is 2° to 4°. In order to reduce operation force of the handle 180 for an elderly person or the like, the inclination angle α1 preferably is approximately 0° to 6° and more preferably is less than or equal to 4°. In a case of considering straight traveling stability, the inclination angle α1 may be set in a range of less than or equal to 12°. The inclination angle α1 may be set at an angle other than the above values in accordance with conditions and required performance. Note that in the present embodiment, the second axis 102 is inclined to the vehicle rear side, but the present disclosure is not limited thereto.

In the present embodiment, as illustrated in Figs. 1 and 17, the kingpins 175 are inclined to the vehicle width direction. An inclination angle α2 of the second axis 102 of the kingpin 175 of the present embodiment to the vehicle width direction is 9° to 10°. For the increase in the pressing amount associated with the change in rod angle which will be described later, the inclination angle α2 is more than or equal to 3°, preferably is more than or equal to 5°, and more preferably is more than or equal to 8°. The inclination angle α2 may be set at an angle other than the above values in accordance with conditions and required performance. Note that in the present embodiment, the second axis 102 is inclined to the inner side in the width direction, but the present disclosure is not limited thereto.

The inclination angle α2 preferably is at least 1° greater, more preferably is at least 3° greater, and still more preferably at least 5° greater than the inclination angle α1.

As in Fig. 17, the axle 11 of the right front wheel 10 is fixed to the right knuckle 173, and the axle 11 of the left front wheel 10 is fixed to the left knuckle 174. In the present embodiment, it is configured such that a camber angle is smaller than the inclination angle α2 when both front wheels 10 are located at a steering angle for forward traveling in a state in which there is the inclination angle α2. In other words, when the camber angle of the front wheels 10 is the same as the inclination angle α2, the front wheels 10 will have a negative camber angle which is an angle equal to the inclination angle α2, but in the present embodiment, the front wheels 10 have a positive camber angle or a negative camber angle which has a small predetermined angle. The small predetermined angle preferably is less than or equal to 3° and more preferably is less than or equal to 2°. In the present embodiment, the front wheels 10 have a positive camber angle of less than or equal to 1° or less than or equal to 0.5°. With the above-described configuration, the axle 11 extends diagonally downward relative to the second axis 102 rather than in the perpendicular direction when both front wheels 10 are located at the steering angle for forward traveling.

The second axis 102 can be said to extend mainly in the up-down direction in the inclined location with the inclination angle α1 and the inclination angle α2. In addition, the second axis 102 can be said to extend at least in the up-down direction since the second axis 102 also slightly extends in the vehicle front-to-rear direction and the vehicle width direction and extends mainly in the up-down direction.

In the present embodiment, as illustrated in Fig. 3, the center shaft 171 is inclined in the vehicle front-to-rear direction. An inclination angle β of the first axis 101 of the center shaft 171 in the vehicle front-to-rear direction is more than or equal to 5°, preferably is more than or equal to 8°, and more preferably is more than or equal to 10°. In the present embodiment, the inclination angle β is set in a range of more than or equal to 8° and less than or equal to 12°, and in Fig. 3, the inclination angle β is 10° to 11°.

The first axis 101 can be said to extend mainly in the up-down direction with the inclined arrangement with the inclination angle β. In addition, the first axis 101 can be said to extend at least in the up-down direction since the inclination angle β slightly extends in the vehicle front-to-rear direction and extends mainly in the up-down direction.

The inclination angle α1 preferably is at least 1° smaller, more preferably is at least 3° smaller, and still more preferably is at least 5° smaller than the inclination angle β. Note that in the present embodiment, the first axis 101 is inclined to the vehicle rear side, but the present disclosure is not limited thereto.

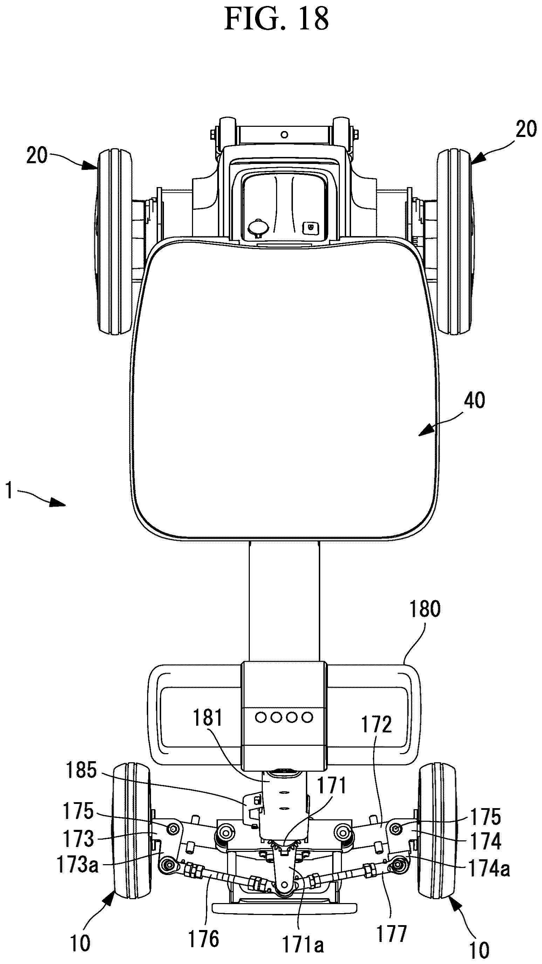

As illustrated in Fig. 18, when the steering angle of both front wheels 10 are 0° or approximately 0° or when both front wheels 10 are located at a straight-traveling steering angle for straight traveling, the pitman arm 171a extends from the center shaft 171 to the vehicle front side, and the knuckle arms 173a, 174a also extend from the knuckles 173, 174 to the vehicle front side. At this time, in the present embodiment, the third coupling portion is located at an outer side in the vehicle width direction relative to the second coupling portion, and the seventh coupling portion is located at an outer side in the vehicle width direction relative to the sixth coupling portion.

In addition, in this state, height positions of the joint components 176b, 177b (the fourth coupling portion and the eighth coupling portion) are higher than height positions of the joint components 176a, 177a (the third coupling portion and the seventh coupling portion). In other words, the rods 176, 177 are located with inclinations such that their other ends are higher than their one ends. In the present embodiment, the seventh coupling portion is higher than the third coupling portion by a difference in height between the eighth coupling portion and the fourth coupling portion such that the inclination of the right rod 176 and the inclination of 177 are equivalent. In addition, because of the presence of the difference in height, the length of the right rod 176 and the length of the left rod 177 differ by more than or equal to 1 mm. In the present embodiment, the length of the right rod 176 and the length of the left rod 177 differ by more than or equal to 2 mm.

Note that designing, setting, and the like of the respective components are performed such that the above-described numerical values are obtained in the unloaded state or in the state in which the aforementioned predetermined load is applied to the electric mobility vehicle 1 placed on a horizontal plane.

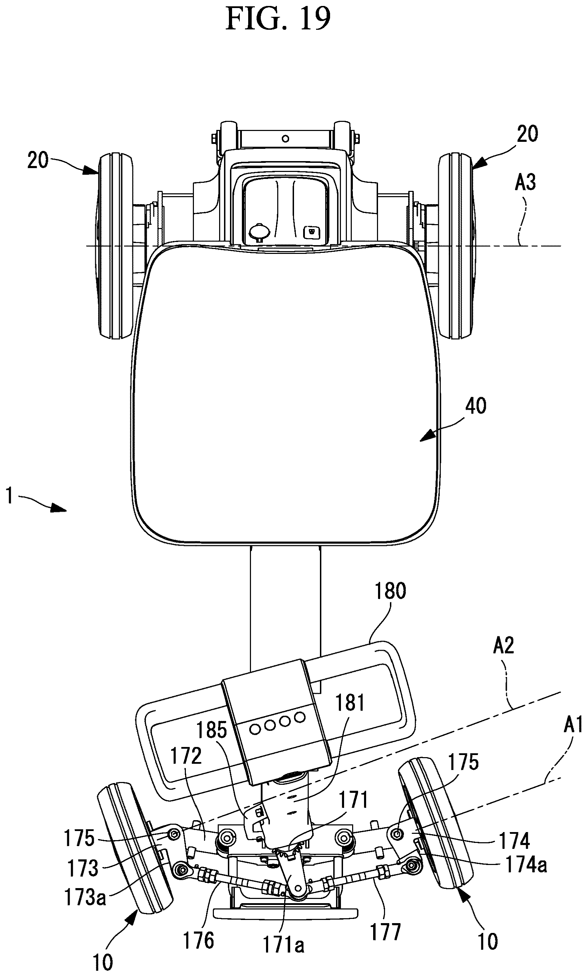

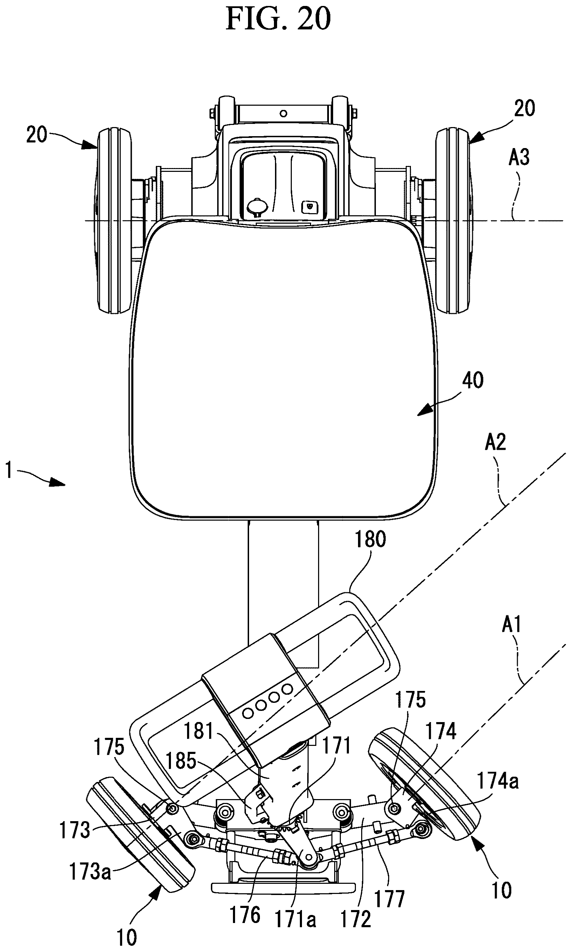

When the passenger turns the handle 180 and the handle shaft 181 such that the electric mobility vehicle 1 moves diagonally to the left as in Figs. 19 and 20, the pitman arm 171a rotates to the left about the first axis 101. At this time, the height positions of the fourth coupling portion and the eighth coupling portion of the pitman arm 171a change in accordance with the aforementioned rotation to the left and the inclination angle β. The height positions of the fourth coupling portion and the eighth coupling portion move downward in accordance with the rotation to the left since the first axis 101 is inclined to the vehicle rear side in the present embodiment.

At this time, the leading end portion (the seventh coupling portion) of the left knuckle arm 174a is pressed by the left rod 177 to the outer side in the vehicle width direction, so that the left knuckle arm 174a rotates to the left about the second axis 102. At this time, the height position of the seventh coupling portion of the left knuckle arm 174a changes in accordance with the aforementioned rotation to the left and the inclination angle α2. The aforementioned rotation to the left and the inclination angle α2 act so as to move the height position of the seventh coupling portion upward since the second axis 102 is inclined to the inner side in the vehicle width direction in the present embodiment.

Therefore, in the present embodiment, an inclination decrease, which is decrease of the inclination of the left rod 177, occurs in which the difference in height position between the eighth coupling portion and the seventh coupling portion decreases in accordance with the aforementioned rotation to the left. In addition, in accordance with an amount of this decrease, the pressing amount by which the left rod 177 presses the leading end portion (the seventh coupling portion) of the left knuckle arm 174a outward in the vehicle width direction increases.

In addition, in the present embodiment, the above-described configuration increases an amount of downward movement of the height positions, per unit angle of the rotation of the pitman arm 171a, of the fourth coupling portion and the eighth coupling portion as the amount of rotation of the pitman arm 171a to the left increases. In addition, in the present embodiment, the above-described configuration moves the height position of the seventh coupling portion upward as the amount of rotation of the left knuckle arm 174a to the left increases. Therefore, the present embodiment enables setting of increasing the pressing amount when the amount of rotation to the left increases.

In addition, at the time of the rotation to the left, the leading end portion (the third coupling portion) of the right knuckle arm 173a is pulled to the inner side in the vehicle width direction by the right rod 176, so that the right knuckle arm 173a rotates to the left about the second axis 102. At this time, the height position of the third coupling portion of the right knuckle arm 173a changes in accordance with the rotation to the left and the inclination angle α2. In the present embodiment, the rotation to the left and the inclination angle α2 act so as to move the height position of the third coupling portion downward since the second axis 102 is inclined to the inner side in the vehicle width direction.

Therefore, in the present embodiment, the amount of an inclination decrease of the right rod 176 caused by a decrease in difference in height position between the first coupling portion and the third coupling portion at the time of the rotation to the left is smaller than the amount of the inclination decrease of the left rod 177 caused by the decrease in difference in height position between the eighth coupling portion and the seventh coupling portion, or there is no amount of the inclination decrease in the right rod 176. Therefore, an increase in the pulling amount by which the right rod 176 pulls the leading end portion (the third coupling portion) of the right knuckle arm 173a to the inner side in the vehicle width direction is smaller than an increase in the pressing amount by which the left rod 177 presses the leading end portion (the seventh coupling portion) of the left knuckle arm 174a to the outer side in the vehicle width direction, or there is no increase in the pulling amount.

Note that in order to make the amounts of the inclination decrease of the left and right rods 176, 177 different as described above, the kingpin 175 can also be located such that the upper side of the second axis 102 is located on the outer side in the vehicle width direction relative to the lower side thereof. In this case, the rods 176, 177 are located with inclinations such that their other ends are lower than their one ends at the time of the straight-traveling steering angle.

A steering angle difference between left and right when the amount of rotation of the pitman arm 171a to the left is large can be considerably increased relative to the steering angle difference when the amount of rotation of the pitman arm 171a to the left is small by means of a degree of the increase in the pressing amount and a degree of the increase in the pulling amount described above. The steering angle difference is a difference between an inner wheel steering angle of an inner wheel (the left front wheel 10) and an outer wheel steering angle of an outer wheel (the right front wheel 10). Also when the pitman arm 171a is rotated to the right, the inner wheel steering angle of the inner wheel (the right front wheel 10) is larger than the outer wheel steering angle of the outer wheel (the left front wheel 10) similarly to the case of the rotation to the left. In addition, the steering angle difference when the amount of rotation of the pitman arm 171a to the right is large can be considerably increased relative to the steering angle difference when the amount of rotation of the pitman arm 171a to the right is small.

One example of the following steering characteristics in which the steering angle difference when the amount of rotation of the pitman arm 171a to the right or left is large is considerably increased relative to the steering angle difference when the amount of rotation of the pitman arm 171a to the right or left is small can be obtained using the above-described configuration.

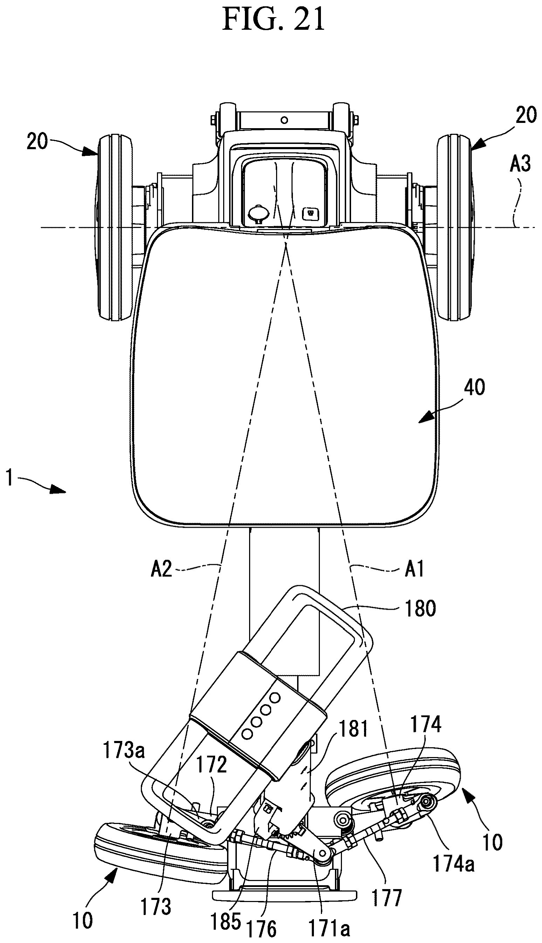

One example of the steering characteristics includes the following: when the steering angle of the inner wheel (the inner wheel steering angle) is about 20°, the steering angle of the outer wheel (the outer wheel steering angle) is about 20°, resulting in a steering angle difference of 0° (Fig. 19). When the steering angle of the inner wheel is about 45°, the steering angle of the outer wheel is about 42°, resulting in a steering angle difference of about 3° (Fig. 20). When the steering angle of the inner wheel is about 102°, the steering angle of the outer wheel is about 78°, resulting in a steering angle difference of about 24° (Fig. 21). In the one example of the steering characteristics, the differences in steering angle are obtained both in the case in which the right front wheel 10 is the inner wheel and the case in which the left front wheel 10 is the inner wheel.

In Fig. 21, an intersection of the center axis A1 of the inner wheel (the left front wheel 10) and the axis A3 passing through the center of the pair of rear wheels 20 and an intersection of the center axis A2 of the outer wheel (the right front wheel 10) and the axis A3 substantially match in plan view. The expression "substantially match" refers to a case in which a distance between the two intersections is less than or equal to 4 cm. In addition, in the vehicle width direction, the two intersections are located between the two rear wheels 20. Furthermore, in the vehicle width direction, the two intersections are located at an intermediate position of the two rear wheels 20. The intermediate position preferably is a perfect center position, but also includes a position spaced from the perfect center position by a distance of less than or equal to 20 cm in the vehicle width direction, preferably a position spaced by a distance of less than or equal to 15 cm, and more preferably a position spaced by a distance of less than or equal to 10 cm. In addition, the two intersections preferably match or substantially match, but even if not, the two intersections should only be located at the intermediate position. The distance between the two intersections preferably is less than or equal to 15 cm, more preferably is less than or equal to 10 cm, and still more preferably is less than or equal to 5 cm.

The above-described state is following the theory of Ackermann steering geometry and is useful for smoothly pivoting the electric mobility vehicle 1 about the above intersections. For the pivoting, the control device 80 drives the motors 50 in the above-described state such that the left and right rear wheels 20 rotate in directions opposite to each other. Such pivoting is referred to as a spin turn in the present embodiment. Rotational speeds of the left and right rear wheels 20 preferably are the same but can be changed as appropriate in accordance with conditions. For smooth pivoting, the two intersections preferably are located at the perfect center position or in its vicinity.

For the location of the above intersections, it is useful to employ the above-described configuration in which the steering angle difference when the amount of rotation of the pitman arm 171a to the right or left is large can be considerably increased relative to the steering angle difference when the amount of rotation of the pitman arm 171a to the right or left is small. When the steering angle of the inner wheel (the left front wheel 10) approaches 90° or 100° as illustrated in Fig. 21, for example, it becomes difficult to apply a rotational force to the left knuckle arm 174a by the pressing force of the left rod 177. In the present embodiment, setting of increasing the pressing amount when the amount of rotation to the right or left increases can be achieved. This is useful for reliably applying rotational forces to the knuckle arms 173a, 174a of the inner wheel when the steering angle of the inner wheel approaches 90° or 100°.

As a comparative example, a simple calculation result of steering characteristics of the theory of Ackermann geometry is shown below. The simple calculation is performed using an equation of tanα = 1/((1/tanβ)-(T/W)), where α is the steering angle of the inner wheel, β is the steering angle of the outer wheel, T is a tread dimension, and W is a wheelbase dimension. In this simple calculation of steering characteristics, the wheelbase dimension is set to be 2.2 times the tread dimension as one example.

The steering characteristics of the comparative example include the following: when the steering angle of the inner wheel is about 20°, the steering angle of the outer wheel is about 17.5°, resulting in a steering angle difference of 2.5°. When the steering angle of the inner wheel is about 45°, the steering angle of the outer wheel is about 35°, resulting in a steering angle difference of about 10°. When the steering angle of the inner wheel is about 102°, the steering angle of the outer wheel is about 77°, resulting in a steering angle difference of about 25°.

The theory of Ackermann geometry is a theory of perfectly matching the positions of the above two intersections. Therefore, when the steering angle of the inner wheel of the comparative example is about 102°, the positions of the two intersections perfectly match at the intermediate position of the two rear wheels 20. As described, the aforementioned one example of the steering characteristics of the present embodiment is useful for a smooth spin turn similarly to the comparative example.

Usually, in order to match the positions of the two intersections at the intermediate position of the two rear wheels 20, when the theory of Ackermann geometry is used, the steering angle difference gradually increases from when the steering angle of the inner wheel is small as described above. In contrast to this, in the present embodiment, an amount of increase in steering angle difference after the steering angle of the inner wheel exceeds 45° considerably greater as compared with the theory of Ackermann geometry as described above. The configuration is useful for reliably applying rotational force from the rods 176, 177 to the knuckle arms 173a, 174a of the inner wheel when the steering angle of the inner wheel increases as described above.

In addition, in the present embodiment, the kingpin 175 is inclined to the inner side in the vehicle width direction. In addition, the inner wheel is located on the rear side of the kingpin 175 as the steering angle of the inner wheel increases. On this occasion, the positive camber angle of the inner wheel increases. In other words, the inner wheel is inclined in a direction in which the lower side of the inner wheel enters beneath the axle 11. With the motion, a portion supported by the inner wheel moves downward by gravity. In Fig. 21, for example, the left front wheel 10 (inner wheel) is inclined to a direction in which its lower side enters beneath the axle 11, and the left knuckle 174 moves downward by gravity. Since the gravity moves an object to a lower side, the configuration may be an assist in bringing the steering angle of the inner wheel into a deep angle such as 90° or 100° by the pressing forces of the rods 176, 177.

In addition, in one example of the above-described steering characteristics of the present embodiment, the steering angle difference when the steering angle of the inner wheel is 20°, 45°, or the like does not conform to the theory of Ackermann geometry. It can also be said that the front wheels 10 are brought into a state close to parallel steering geometry or the like when a right turn or left turn is made at low speed.

In the present embodiment, the portion supported by the inner wheel moves downward by gravity as the steering angle increases. The configuration works for increasing the steering angle of the inner wheel. Since there are plays because of gaps between respective components of the steering mechanism, elastic deformation of the respective components, and the like, when a right turn or left turn is made with the steering angle of the inner wheel being less than or equal to 45°, the steering angle of the inner wheel is likely to increase in a range of the plays because of the above-described motion related to gravity. This contributes to smooth running of the electric mobility vehicle 1 when a right turn or left turn is made at low speed.

In the aforementioned one example of the steering characteristics of the present embodiment, the steering angle difference is about 3° or less than or equal to 3° when the steering angle of the inner wheel is a first angle which is any angle in a range of 40° to 45°. In addition, the steering angle difference is about 24° when the steering angle of the inner wheel is 102° (a second angle) which is any angle in a range of more than or equal to 90°. At this time, the above two intersections are located between the two rear wheels 20. At this time, when the simple calculation of the Ackermann geometry theory, for example, is performed for a thin vehicle body whose W is three times T, the steering angle difference becomes approximately 16° when the above two intersections match in position.

Therefore, it can be said that the steering angle difference at the second angle is more than or equal to five times the steering angle difference at the first angle and is more than or equal to seven times or more than or equal to eight times in the aforementioned one example of the steering characteristics. The configuration means that when the steering angle of the inner wheel increases in the steering angle range close to 90° as described above, the amount of increase in steering angle difference per unit steering angle change of the inner wheel (when the steering angle of the inner wheel changes by 1°) increases. The configuration is useful for reliably applying rotational forces from the rods 176, 177 to the knuckle arms 173a, 174a of the inner wheel when the steering angle of the inner wheel increases.

In addition, in the present embodiment, the rods 176, 177 are located with inclinations such that the other ends are higher than one ends when the pair of front wheels 10 are located at the straight-traveling steering angle. At this time, when the electric mobility vehicle 1 is seen from the front side as in Fig. 1, the difference in height position between the third coupling portion and the fourth coupling portion and the difference in height position between the seventh coupling portion and the eighth coupling portion are set to be between 32 and 38 mm in the present embodiment. The differences in height position at the straight-traveling steering angle preferably are more than or equal to 15 mm, more preferably are more than or equal to 20 mm, and still more preferably are more than or equal to 25 mm.

Note that the height positions of the respective coupling portions can also be measured using the center points of the spherical portions of the joint components 176a, 176b, 177a, and 177b (the pivot centers of the joints), and can also be measured using the positions of the specific portions of fixing members such as bolts that fix the joint components 176a, 176b, 177a, and 177b to the pitman arm 171a or the knuckle arms 173a, 174a.

In the present embodiment, the differences in height decrease by 9 to 10 mm in the rod 176 of the inner wheel when the steering angle of the inner wheel is 102°, and do not change in the rod 177 of the outer wheel or increase in a range of less than or equal to 5 mm. In other words, when the inner wheel is changed to 102° from the straight-traveling steering angle, the difference in height position between the third coupling portion and the fourth coupling portion of the rod 176 of the inner wheel decreases by 9 to 10 mm. The decrease preferably is more than or equal to 4 mm, more preferably is more than or equal to 6 mm, and still more preferably is more than or equal to 8 mm.

As described above, when the inner wheel steering angle is the second angle, the difference in height position in the right rod or the left rod corresponding to the inner wheel obviously decreases, and the inclination angles of the rods 176, 177 of the inner wheel decrease accordingly. The configuration is extremely useful for reliably applying rotational forces from the rods 176, 177 to the knuckle arms 173a, 174a of the inner wheel when the steering angle of the inner wheel increases.

When the length of the rod 176 is 170 mm, the rod 176 is inclined at an angle (rod angle) of about 12° relative to the horizontal plane when the difference in height position is 35 mm, and the rod 176 is inclined at an angle (rod angle) of about 8.5° relative to the horizontal plane when the difference in height position is 25 mm. At the straight-traveling steering angle, the rods 176, 177 preferably are inclined at angles (rod angles) of more than or equal to 5°, more preferably more than or equal to 8°, and still more preferably more than or equal to 10° relative to the horizontal plane. For reliably applying rotational forces from the rods 176, 177 to the knuckle arms 173a, 174a, the angle at the straight-traveling steering angle is less than or equal to 40°, preferably less than or equal to 30°, and more preferably less than or equal to 20°.

In addition, in the present embodiment, the right second axis 102 is inclined such that its upper side is located on the inner side in the vehicle width direction relative to its lower side. In addition, the right knuckle arm 173a extends from the right knuckle 173 to the vehicle front side at the straight-traveling steering angle, and one end of the right rod 176 is coupled to the leading end portion of the right knuckle arm 173a. With the configuration, the height position of the one end of the right rod 176 changes as the steering angle of the right front wheel 10 as the inner wheel increases. The configuration is useful for achieving the above-described steering characteristics without using a complicated configuration and reliably applying rotational forces from the rods 176, 177 to the knuckle arms 173a, 174a of the inner wheel when the steering angle of the inner wheel increases.

In addition, in the present embodiment, the first axis 101 is inclined such that its upper side is located on the vehicle rear side relative to its lower side. In addition, the pitman arm 171a extends from the center shaft 171 to the vehicle front side at the straight-traveling steering angle, and the opposite end of the right rod 176 is coupled to the leading end portion of the pitman arm 171a. With the configuration, the height position of the opposite end of the right rod 176 changes as the steering angle of the right front wheel 10 as the inner wheel increases. The configuration is useful for achieving the above-described steering characteristics without using a complicated configuration and reliably applying rotational forces from the rods 176, 177 to the knuckle arms 173a, 174a of the inner wheel when the steering angle of the inner wheel increases.

For example, a configuration is conceivable in which the leading end portion of the pitman arm 171a is located considerably forward to the knuckle arms 173a, 174a so as to reliably apply rotational forces from the rods 176, 177 to the knuckle arms 173a, 174a of the inner wheel in a state in which the steering angle of the inner wheel reaches more than or equal to 90° and in which the amounts of rotation of the knuckle arms 173a, 174a of the inner wheel also reach more than or equal to 90° as in Fig. 21. However, the configuration is a bottleneck in terms of decreasing the dimension of the electric mobility vehicle 1 in the front-to-rear direction.

In the present embodiment, the above-described configuration enables rotational forces to be reliably applied from the rods 176, 177 to the knuckle arms 173a, 174a of the inner wheel when the steering angle of the inner wheel increases. Therefore, the present embodiment is also useful for decreasing the dimension of the electric mobility vehicle 1 in the front-to-rear direction.

Note that these days the electric mobility vehicle 1 is used in an institution and a luxury liner in an increasing number of cases. In such cases, it is particularly important to downsize the electric mobility vehicle 1. If a user is unable to smoothly pivot the electric mobility vehicle 1 in an elevator, for example, he/she needs to move the electric mobility vehicle 1 backward when getting on or getting out of the elevator. This causes, for example, a situation in which a long time is required when the electric mobility vehicle 1 gets out of the elevator. This is not preferable for the user of the electric mobility vehicle 1, a user of the elevator, and the like. Therefore, downsizing and turning performance of the electric mobility vehicle 1 are important.

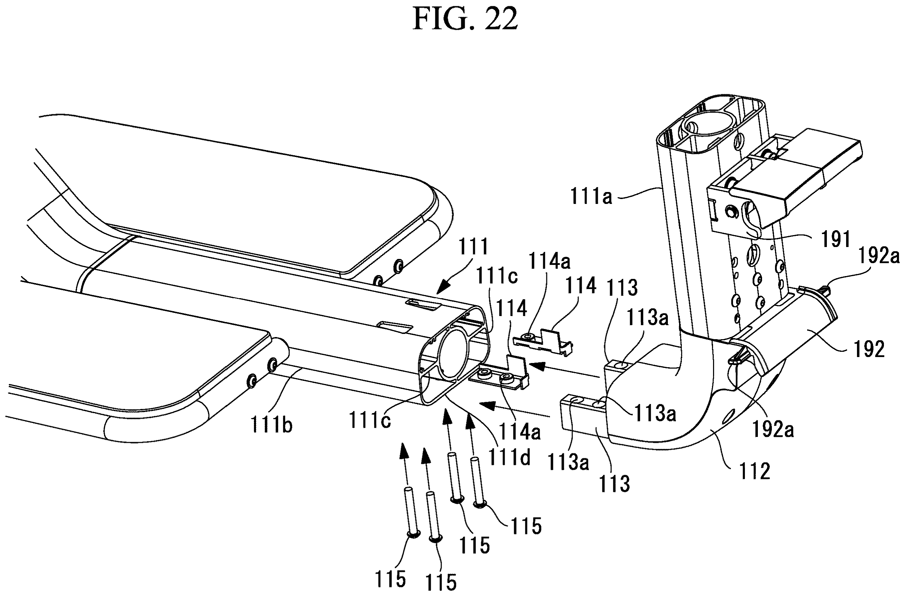

The front-wheel-side frame 111 has a front-to-rear-direction frame 111b manufactured by extrusion molding of metal such as aluminum. The front-to-rear-direction frame 111b has one or more partition walls 111c that have a long side in the vehicle front-to-rear direction as in Fig. 22 and partition an inner space into upper and lower spaces. On the other hand, the up-down-direction frame 111a is also manufactured by extrusion molding, and an extrusion molding material which is the same as that of the front-to-rear-direction frame 111b can be used. The configuration is useful for reduction of manufacturing cost, weight reduction, and the like.

In addition, in the present embodiment, the swing control portion that can reduce the tilting behavior is employed. The configuration reduces the tilting behavior of the electric mobility vehicle 1 in a spin turn or immediately before the start of a spin turn, for example. This can also be said to be useful for causing motions of the rods 176, 177 described above to be the intended motions or to be as close as possible to the intended motions and useful for causing the electric mobility vehicle 1 to smoothly make a spin turn.

One end of a curved member 112 made of metal such as aluminum is fixed to a rear end of the front-to-rear-direction frame 111b by a fixing structure. As the fixing structure, one or more projecting portions 113 extending toward the vehicle front side are provided on one end of the curved member 112. The projecting portion 113 has an upper surface along a lower surface of the partition walls 111c, and two or more through-holes 113a are formed in the projecting portions 113 at intervals in the vehicle front-to-rear direction. Each of the through-holes 113a extends through the projecting portion in the up-down direction.

A dimension in the up-down direction of the projecting portion 113 is equivalent to a distance between a lower wall 111d and the partition wall 111c of the front-to-rear-direction frame 111b. For example, the projecting portion 113 is inserted into the space between the partition wall 111c and the lower wall 111d until one end of the curved member 112 comes into contact with the rear end of the front-to-rear-direction frame 111b.

Two or more holes are formed in the partition wall 111c at positions corresponding to the two or more through-holes 113a of the inserted projecting portion 113. Two or more holes are also formed in the lower wall 111d at positions corresponding to the two or more through-holes 113a of the inserted projecting portion 113.

In addition, the fixing structure has nut members 114 located on the partition walls 111c. Female threads 114a are formed in the nut member 114 at positions corresponding to the two or more through-holes 113a of the projecting portion 113.

In a state in which the projecting portions 113 are inserted into the aforementioned space as described above and in which the nut members 114 are located on the partition walls 111c, a plurality of bolts 115 are respectively inserted into the two or more holes of the partition walls 111c, and the plurality of bolts 115 are respectively screwed with the female threads 114a, so that one end of the curved member 112 is fixed to the rear end of the front-to-rear-direction frame 111b. An end of the up-down-direction frame 111a is fixed to the other end of the curved member 112 by a similar fixing structure.

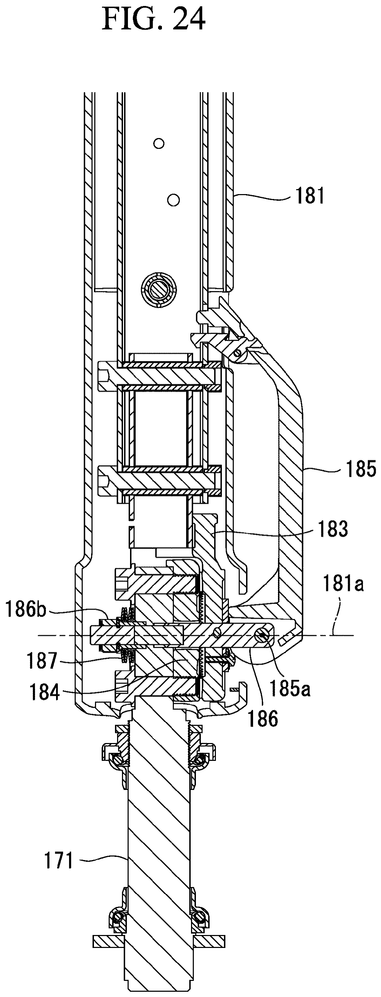

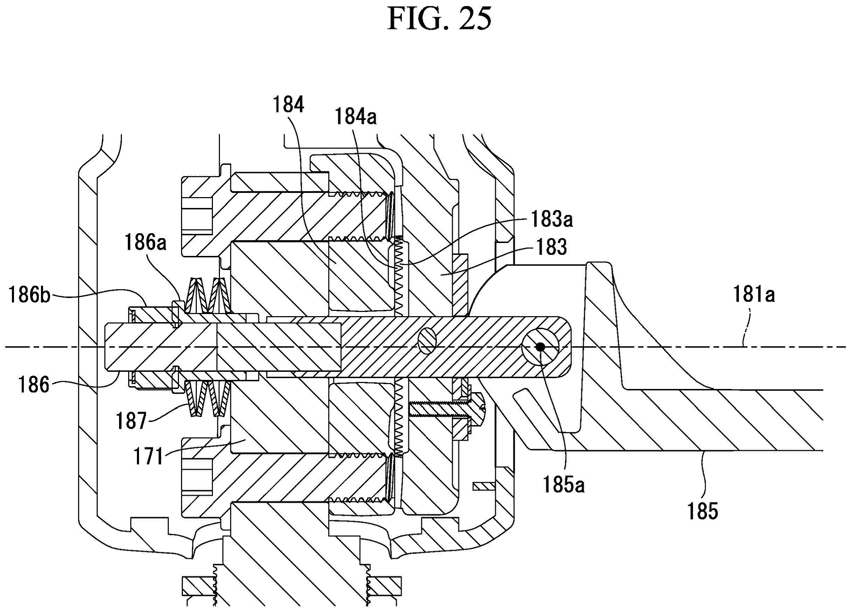

An angle adjusting mechanism for adjusting the angle of the tilting position in the front-to-rear direction of the handle shaft 181 about an axis 181a in Fig. 2 is provided. The angle adjusting mechanism has a first engaging member 183 fixed to a lower end portion of the handle shaft 181 and a second engaging member 184 fixed to the center shaft 171 as illustrated in Fig. 24 and Fig. 25. When the first engaging member 183 rotates about the axis 181a relative to the second engaging member 184, the inclination in the front-to-rear direction of the handle shaft 181 changes.

A contact surface 183a of the first engaging member 183 with the second engaging member 184 is, for example, an irregular contact surface having a plurality of radially extending protrusions or the like, and a contact surface 184a of the second engaging member 184 with the first engaging member 183 is a contact surface having a shape complementary to the contact surface 183a.

A clump lever 185 is in contact with a surface of the first engaging member 183 on the opposite side of the contact surface 183a. The clump lever 185 is attached to a one end portion of a tightening shaft 186, and the clump lever 185 is pivotable in the up-down direction about an axis 185a of its base end portion.

The clump lever 185 has a tightening position at a first pivot position at which a leading end portion is located substantially immediately above the base end portion, for example, as in Fig. 24 and a releasing position at a second pivot position rotated (pivoted) by a predetermined angle from the tightening position as in Fig. 25. A publicly-known clump lever having a cum curved surface formed on its base end portion can be used as the clump lever 185.

The tightening shaft 186 extends in a direction along the axis 181a, and in the present embodiment, a center axis of the tightening shaft 186 matches the axis 181a. The tightening shaft 186 is movable in a direction along the center axis relative to the first engaging member 183 and the second engaging member 184.

A flanged bush 186a, a nut 186b, and the like are fixed to the other end of the tightening shaft 186, and a plurality of disc springs are aligned in a direction along the center axis of the tightening shaft 186 on an outer circumferential surface of the tightening shaft 186 on the other end side. The plurality of disc springs are spring members 187, and other spring members such as coil springs can also be used instead of the plurality of disc springs. The spring members 187 are located to be sandwiched between the flanged bush 186a and the center shaft 171. The flanged bush 186a and the nut 186b are members that move together with the tightening shaft 186 when the tightening shaft 186 moves to the clump lever 185 side to thereby press the spring members 187 to the center shaft 171 side.

When the clump lever 185 is located at the tightening position to thereby move the tightening shaft 186 to the clump lever 185 side, the spring members 187 are compressed to a first compression state. When the clump lever 185 is located at the releasing position, the tightening shaft 186 moves in a direction opposite to the clump lever 185, so that the spring members 187 are brought into a second compression state in which an amount of compression is smaller than in the first compression state. The spring members 187 are compressed to some degree in the second compression state. In another example, the spring members 187 are not compressed at all.

For the contact surface 183a to move about the axis 181a relative to the contact surface 184a in this state, a climbing-over operation in which the spring members 187 move in the direction along the aforementioned center axis to a position at which engagement of the irregularities with the contact surface 184a is released is required. In the present embodiment, it is configured such that the spring members 187 are compressed in the climbing-over operation. Therefore, when the inclination in the front-to-rear direction of the handle shaft 181 changes, the spring members 187 are compressed each time engagement of the irregularities between the contact surface 183a and the contact surface 184a is climbed over. The configuration enables the user to change the position in the front-to-rear direction of the handle shaft 181 step by step. In addition, the user is able to perform the adjustment only by moving the clump lever 185 to the releasing position.

When the user pivots the clump lever 185 to the tightening position after the handle shaft 181 is located at a desired tilting position, the spring members 187 are compressed to the first compression state. In this state, a remaining compression margin of the spring members 187 is smaller than an amount of movement necessary for the climbing-over operation. The configuration is useful for preventing an unintended change of the tilting position of the handle shaft 181 to which a great force is applied.

A portion of the first engaging member 183 with which the base end portion of the clump lever 185 comes into contact has a first contact portion 183b made of a metal material and a second contact portion 183c made of a resin material. It is preferable to select a resin material having a low frictional coefficient as the resin material. The first contact portion 183b and the second contact portion 183c are aligned in a direction in which the clump lever 185 pivots. In a case in which the direction along the aforementioned center axis is the up-down direction of the clump, the second contact portion 183c is located immediately below the axis 185a.

With the configuration, the base end portion of the clump lever 185 comes into contact with the first contact portion 183b and the second contact portion 183c when the clump lever 185 is at the tightening position. Therefore, a tightening state at the tightening position is surely maintained. On the other hand, when the clump lever 185 moves from the tightening position to the releasing position, the base end portion of the clump lever 185 comes into contact only with the second contact portion 183c. Therefore, the clump lever 185 smoothly moves from the tightening position to the releasing position.

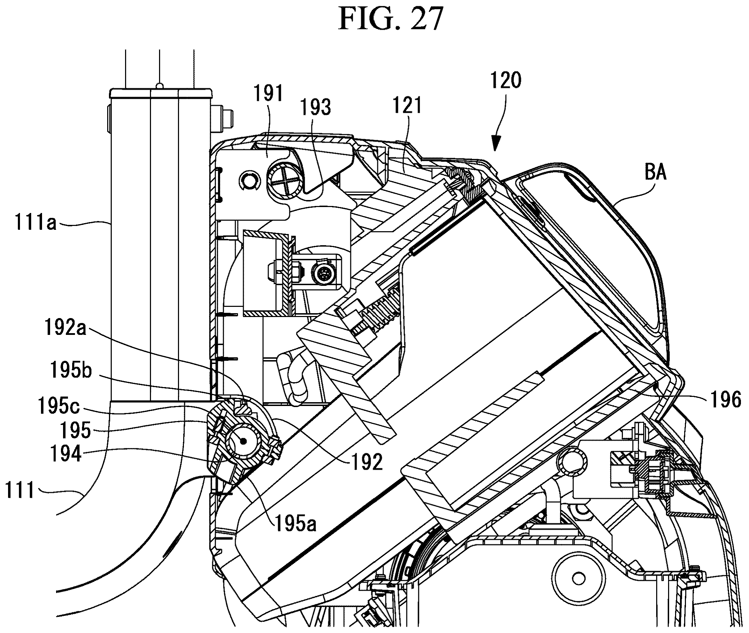

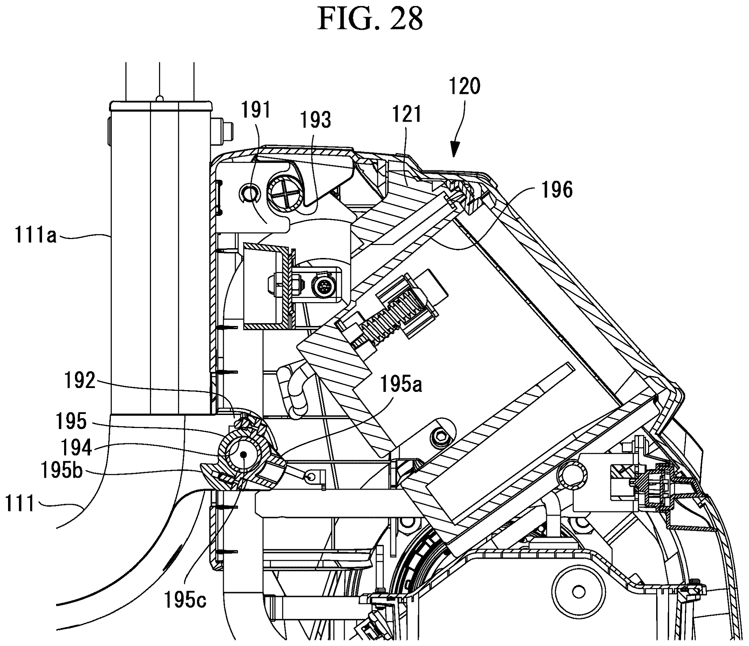

The front-wheel-side vehicle body 110 is detachably coupled to the rear-wheel-side vehicle body 120. As illustrated in Fig. 22, in the present embodiment, an upper engaging portion 191 and a lower engaging portion 192 located below the upper engaging portion 191 are provided at a rear end portion of the front-wheel-side frame 111 of the front-wheel-side vehicle body 110. The lower engaging portion 192 is an engaging portion that is open downward. As illustrated in Figs. 27 and 28, the rear-wheel-side frame 121 of the rear-wheel-side vehicle body 120 has an upper engaged portion 193 and a lower engaged portion 194 located at height positions corresponding to the upper engaging portion 191 and the lower engaging portion 192. In the present embodiment, the engaged portions 193, 194 are frame components such as pipes or rods extending in the vehicle width direction, for example.

The lower engaging portion 192 that is open downward approaches the lower engaged portion 194 diagonally from the front side to thereby engage with the lower engaged portion 194 from above. In contrast, when detaching the lower engaging portion 192 from the lower engaged portion 194, the lower engaging portion 192 needs to be moved diagonally to the front side relative to the lower engaged portion 194.

As illustrated in Fig. 22, locking projections 192a protruding in the vehicle width direction are provided on ends in the vehicle width direction of the lower engaging portion 192. On the other hand, a rotating member 195 for locking is attached to, for example, part of the rear-wheel-side frame 121 of the rear-wheel-side vehicle body 120. In the present embodiment, the rotating member 195 is rotatable about an axis 195c extending in the vehicle width direction, but the rotating member 195 may be rotatable about an axis extending in another direction. In the present embodiment, the rotating member 195 is attached to a pipe-like frame of the lower engaged portion 194 so as to be rotatable.

The rotating member 195 has, at a part of its circumferential direction, a battery contact portion 195a protruding in the radial direction. In addition, the rotating member 195 has, at another part of its circumferential direction, a lock portion 195b protruding in the radial direction.

The rotating member 195 is rotationally biased in a predetermined direction (the counterclockwise direction in Fig. 28) by a biasing member such as a torsion spring not illustrated. Accordingly, the rotating member 195 is located at the position in Fig. 28 in an unloaded state. At the position, the battery contact portion 195a is located at a position with which the battery BA mounted on a battery storage portion 196 can come into contact. Then, in a process in which the battery BA is mounted on the battery storage portion 196 as illustrated in Fig. 27, the battery contact portion 195a is pressed by the battery BA in a direction opposite to a biasing direction of the biasing member. Then, when the battery BA is mounted at a predetermined position, the rotating member 195 rotates to the position illustrated in Fig. 27.

It is configured such that in the state, the lock portion 195b of the rotating member 195 is located at least in front of the locking projection 192a and such that the locking projection 192a is restricted by the lock portion 195b at least from moving forward. Accordingly, the lower engaging portion 192 can no longer be moved diagonally to the front side relative to the lower engaged portion 194. In other words, engagement between the lower engaging portion 192 and the lower engaged portion 194 cannot be released unless the battery BA is withdrawn from the battery storage portion 196.

As described, the rotating member 195 attached to the rear-wheel-side frame 121 so as to be rotatable rotates to the predetermined rotational position by mounting of the battery BA. In addition, at the predetermined rotational position, the rotating member 195 comes into contact with part of the front-wheel-side frame 111 engaging with the engaged portion of the rear-wheel-side frame 121, and the contact restricts a motion in a direction in which engagement of the lower engaging portion (engaging portion) 192 of the front-wheel-side frame 111 is released.

As illustrated in Fig. 2 and the like, a stand member 197 is attached to a rear end portion of the electric mobility vehicle 1. The stand member 197 has a supporting portion 197a fixed to the seat unit 40 and extending from the seat unit 40 to the rear side and a width-direction extending portion 197b having a center portion fixed to the supporting portion 197a and extending in the vehicle width direction. The width-direction extending portion 197b has its both ends located on the vehicle rear side relative to its center side, and non-slip members 197c made of a material having rubber-like elasticity may be attached to both ends.

Using the fall prevention members 126 as a fulcrum, the user can tilt the electric mobility vehicle 1 to the rear side as in Fig. 29 to bring both ends of the width-direction extending portion 197b into contact with the ground, so that the electric mobility vehicle 1 can stand on its own by means of the fall prevention members 126 and the width-direction extending portion 197b. The state is useful for decreasing a storage space of the electric mobility vehicle 1. In addition, the user can bring the electric mobility vehicle 1 into the stored state without requiring work such as folding.

The center axis of the spring 140 is located on the vehicle front side relative to a rotational axis of the rear wheel 20. The configuration is advantageous for decreasing the dimension in the front-to-rear direction of the electric mobility vehicle 1.

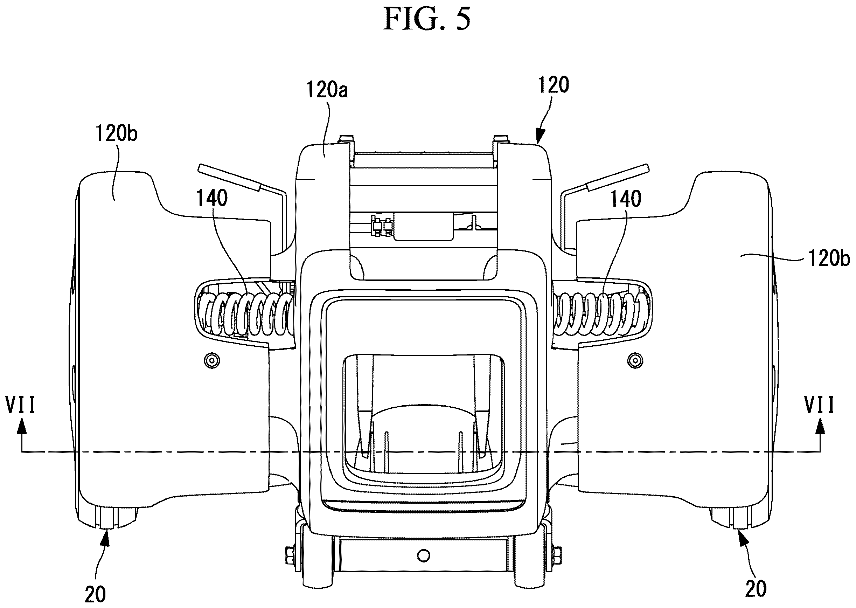

In addition, on the rear-wheel-side cover 120a, a fender 120b (Fig. 5) of the right rear wheel 20 preferably is fixed to the right swing portion 2. The same applies to a left fender 120b. For example, the fender 120b is fixed to the rear-wheel supporting member 132, the motor 50, and the like of the swing portion 2 using a plurality of bolts (not illustrated).

In this case, the fender 120b moves in the up-down direction together with the swing portion 2 and the rear wheel 20. Therefore, even in a case in which the rear wheel 20 significantly moves in the up-down direction about the swing axis 150a, a change in shape in a case in which the electric mobility vehicle 1 is seen from the rear side, the lateral side, and the like appears to be small. The configuration can improve the function of the rear-wheel suspensions while maintaining the appearance of the electric mobility vehicle 1, thereby improving the feeling of the passenger of the electric mobility vehicle 1.

Note that also in a case in which the front-wheel-side vehicle body 110 is provided with two or more pairs of the front wheels 10, the above-described various effects of the rear-wheel suspensions, the stabilizer, and the steering mechanism may be achieved similarly.

In addition, also in a case in which the electric mobility vehicle 1 is not provided with the rear-wheel suspensions, the stabilizer, or the like, the above-described various effects of the steering mechanism may be achieved similarly.

In addition, also in cases such as a case in which another wheel is provided between the front wheels 10 and the rear wheels 20 and a case in which another wheel is provided on the rear side of the rear wheels 20, the above-described various effects of the rear-wheel suspensions and the stabilizer may be achieved similarly.

In addition, also in a case in which the electric mobility vehicle 1 is not provided with the rear-wheel suspensions and the stabilizer and is provided with one or more rear wheels 20 instead of the pair of rear wheels 20, the above-described various effects of the steering mechanism and like effects may be achieved.

In addition, also in a case in which the front-wheel-side vehicle body 110 and the rear-wheel-side vehicle body 120 are coupled in an unremovable aspect, the above-described various effects of the rear-wheel suspensions, the stabilizer, and the steering mechanism may be achieved. In this case, the front-wheel-side frame 111 and the rear-wheel-side frame 121 are integral, for example, and the vehicle body frame of the electric mobility vehicle 1 is formed by the front-wheel-side frame 111 and the rear-wheel-side frame 121.

In addition, in a case in which the rear-wheel supporting member 132 is not provided on the leading end portion of the swing base 131, one end of the spring 140 may be fixed to another member such as the housing of the motor 50 or may be fixed to another member fixed to or provided on the swing base 131. In this case, one end of the spring 140 is attached to the leading end portion of the swing base 131 with the member interposed therebetween.

On the other hand, one end of the spring 140 may be directly attached to the leading end portion of the swing base 131.

Also in these cases, the above-described various effects of the rear-wheel suspension may be achieved.

In addition, two (two or more) seat units 40 aligned in the front-to-rear direction can also be attached to the electric mobility vehicle 1. In this case, two (two or more) persons are seated on and ride on the electric mobility vehicle 1 so as to align in the front-to-rear direction. Also in such a case, the above-described various effects of the rear-wheel suspensions, the stabilizer, and the steering mechanism may be achieved.

### {Reference Signs List}

- 1: electric mobility vehicle
- 2: swing portion
- 3, 4, 4', 4", 5, 6, 7: swing control portion
- 10: front wheel
- 20: rear wheel
- 110: front-wheel-side vehicle body
- 111: front-wheel-side frame
- 120: rear-wheel-side vehicle body
- 121: rear-wheel-side frame
- 131: swing base
- 132: rear-wheel supporting member
- 171: center shaft
- 171a: pitman arm
- 172: base
- 173: right knuckle
- 173a: right knuckle arm
- 174: left knuckle
- 174a: left knuckle arm
- 175: kingpin
- 176: right rod
- 177: left rod
- 140: spring
- BA: battery

## Claims

1. A steering mechanism that steers a pair of front wheels of an electric mobility vehicle, wherein
the steering mechanism is capable of steering an inner wheel and an outer wheel such that a steering angle difference between an inner wheel steering angle and an outer wheel steering angle when the inner wheel steering angle is a second angle which is within a range of 90° or greater is at least five times the steering angle difference when the inner wheel steering angle is a first angle which is within a range of 40° to 45°, wherein the inner wheel steering angle is a steering angle of the inner wheel and the outer wheel steering angle is a steering angle of the outer wheel.

2. The steering mechanism according to claim 1, wherein the pair of front wheels have a right front wheel and a left front wheel, the steering mechanism comprising:
a center shaft that is rotatable about a first axis extending at least in an up-down direction and that is rotated by operation of a handle;
a pitman arm fixed to the center shaft;
a right knuckle that is rotatable about a right second axis extending at least in the up-down direction and that supports the right front wheel;
a right knuckle arm provided in the right knuckle;
a left knuckle that is rotatable about a left second axis extending at least in the up-down direction and that supports the left front wheel;
a left knuckle arm provided in the left knuckle;
a right rod having one end coupled to the right knuckle arm and an opposite end coupled to the pitman arm; and
a left rod having one end coupled to the left knuckle arm and an opposite end coupled to the pitman arm, wherein
each of the rods is arranged in an inclined manner such that a difference in height position between the opposite end and the one end is more than or equal to 15 mm when the pair of front wheels are located at a straight-traveling steering angle for straight traveling of the electric mobility vehicle, and when the inner wheel steering angle is the second angle, the difference in height position is smaller than the difference in height position at the straight-traveling steering angle by at least 4 mm.

3. A steering mechanism that steers a right front wheel and a left front wheel of an electric mobility vehicle, the steering mechanism comprising:
a center shaft that is rotatable about a first axis extending at least in an up-down direction and that is rotated by operation of a handle;
a pitman arm fixed to the center shaft;
a right knuckle that is rotatable about a right second axis extending at least in the up-down direction and that supports the right front wheel;
a right knuckle arm provided in the right knuckle;
a left knuckle that is rotatable about a left second axis extending at least in the up-down direction and that supports the left front wheel;
a left knuckle arm provided in the left knuckle;
a right rod having one end coupled to the right knuckle arm and an opposite end coupled to the pitman arm; and
a left rod having one end coupled to the left knuckle arm and an opposite end coupled to the pitman arm, wherein
each of the rods is arranged in an inclined manner such that a difference in height position between the opposite end and the one end is more than or equal to 15 mm when the right front wheel and the left front wheel are located at a straight-traveling steering angle for straight traveling of the electric mobility vehicle, and when the inner wheel steering angle is 90° or greater, the difference in height position becomes smaller than the difference in height position at the straight-traveling steering angle by at least 4 mm.

4. The steering mechanism according to claim 2 or 3, wherein the right second axis is inclined in a vehicle width direction, and the right knuckle arm extends from the right knuckle toward a vehicle front side at the straight-traveling steering angle, and the one end of the right rod is coupled to a leading end portion of the right knuckle arm, whereby the height position of the one end of the right rod changes in accordance with an increase in a steering angle of the right front wheel.

5. The steering mechanism according to claim 2 or 3, wherein the first axis is inclined to a vehicle rear side, the pitman arm extends from the center shaft toward a vehicle front side at the straight-traveling steering angle, and the opposite end of the right rod is coupled to a leading end portion of the pitman arm, whereby the height position of the opposite end of the right rod changes in accordance with an increase in a steering angle of the right front wheel.

6. The steering mechanism according to claim 2 or 3, wherein the opposite end of the right rod and the opposite end of the left rod are located to be aligned in an up-down direction.

7. An electric mobility vehicle comprising:
a pair of front wheels;
the steering mechanism according to any of claims 1 to 3;
a pair of rear wheels;
a vehicle body frame; and
a pair of swing portions,
wherein when one end in a vehicle width direction of each of the swing portions is used as a base end and when the other end in the vehicle width direction is used as a leading end, a base end side of each of the swing portions is supported by the vehicle body frame so as to be swingable in an up-down direction about a swing axis extending in the vehicle front-to-rear direction, and the respective rear wheels are supported on the swing portions so as to move in the up-down direction together with leading end sides of the respective swing portions,
wherein the electric mobility vehicle comprises:
a biasing member configured to apply a downward force to each of the swing portions when the leading end sides move upward; and
a swing control portion configured to restrain different-direction swing in which one of the base end sides of the pair of swing portions swings in a direction different from the other in the up-down direction or limit the different-direction swing within a predetermined range.
